(19) Europäisches Patentamt
European Patent Office
Office européen des brevets

(11) EP 2 960 272 B1

(12) **EUROPEAN PATENT SPECIFICATION**

(45) Date of publication and mention of the grant of the patent:
**10.04.2019 Bulletin 2019/15**

(21) Application number: **14751710.6**

(22) Date of filing: **30.01.2014**

(51) Int Cl.:
***C08J 9/00*** *(2006.01)* ***C08J 11/04*** *(2006.01)*
***C08L 25/06*** *(2006.01)*

(86) International application number:
**PCT/JP2014/052135**

(87) International publication number:
**WO 2014/125933 (21.08.2014 Gazette 2014/34)**

(54) **STYRENIC RESIN EXTRUDED FOAM AND METHOD FOR RECYCLING SAME**

EXTRUDIERTER SCHAUMSTOFF AUS STYROLHARZ UND VERFAHREN ZUM RECYCLING DAVON

MOUSSE EXTRUDÉE DE RÉSINE DE TYPE STYRÉNIQUE ET PROCÉDÉ POUR LE RECYCLAGE DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.02.2013 JP 2013026197**

(43) Date of publication of application:
**30.12.2015 Bulletin 2015/53**

(73) Proprietor: **Kaneka Corporation**
**Osaka-shi, Osaka 530-8288 (JP)**

(72) Inventors:
- **KUTSUMIZU, Ryuta**
  **Settsu-shi**
  **Osaka 566-0072 (JP)**
- **SHIMIZU, Koji**
  **Settsu-shi**
  **Osaka 566-0072 (JP)**

(74) Representative: **Vossius & Partner**
**Patentanwälte Rechtsanwälte mbB**
**Siebertstrasse 3**
**81675 München (DE)**

(56) References cited:
**WO-A1-2009/029290**
**WO-A1-2011/073141**
**WO-A1-2012/082332**
**WO-A2-2010/080285**
**JP-A- H07 238 195**
**JP-A- H08 269 275**
**JP-A- 2001 139 714**
**JP-A- 2009 516 019**
**JP-A- 2010 527 399**
**JP-A- 2011 513 537**
**JP-A- 2012 528 921**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a styrenic resin extruded foam having both thermal stability and flame retardancy and a method for recycling the foam.

### Background Art

A conventionally known method of continuously producing a styrenic resin foam includes heat-melting a styrenic resin with an extruder or a similar apparatus, next adding a foaming agent, then cooling the mixture, and extruding the mixture into a low pressure area.

In order to make styrenic resin extruded foams meet the flammability standard of a heat insulating board of an extruded styrene foam in accordance with JIS A9511, a flame retardant is added.

The flame retardant suited for styrenic resin extruded foams is required to have a main characteristic of not decomposing at a temperature of about 230°C, at which styrenic resins are typically extruded. This is because decomposition of a flame retardant in such an extruding condition causes a resin to degrade and thus gives adverse effects such as poor moldability and uncontrollable foam bubble diameters to a resulting foam.

Another characteristic required for the flame retardant suited for styrenic resin extruded foams is efficient decomposition before the styrenic resin decomposes. Polystyrene is known to decompose from around 300°C. On this account, if containing a flame retardant that does not efficiently decompose at a temperature lower than around 300°C, the foam may fail to meet the flammability standard in accordance with JIS A9511. To achieve a required flame retardancy, a flame retardant is accordingly required to be added in a larger amount, and this is likely to increase the production cost or to cause adverse effects such as poor moldability of a resulting foam.

In such circumstances, hexabromocyclododecane (hereinafter abbreviated as "HBCD") has been widely used as the flame retardant for styrenic resin extruded foams. The HBCD is known to be comparatively stable in extruding conditions but to efficiency decompose when polystyrene decomposes, and can provide high flame retardancy even when added in a small amount.

The HBCD is unfortunately a compound that hardly decomposes and highly accumulates in organisms, and thus is unfavorable in terms of environmental health. There is thus a demand for a reduction in the amount of HBCD used and development of alternative flame retardants to the HBCD.

On this account, styrenic resin extruded foams including bromine flame retardants except the HBCD have been studied.

For example, as alternative flame retardants to the HBCD, polymer flame retardants as described in Patent Document 1 have been developed in place of conventional low-molecular flame retardants.

Among them, a brominated (styrene-butadiene block copolymer), which is equivalent in flame retardancy to the HBCD, has been drawing attention. However, the brominated (styrene-butadiene block copolymer) has poor thermal stability. Patent Document 2 discloses a technique of using an alkyl phosphite and an epoxy compound as stabilizers to improve the thermal stability of the brominated polymer flame retardant. The use of the stabilizers certainly improves the thermal stability of the brominated polymer flame retardant, whereas it is known that the flame retardancy of a flame retardant is incompatible with the thermal stability. Patent Document 2 describes no flame retardancy when each stabilizer is used.

During the production of styrenic resin extruded foams, extruded foams are typically cut with a cutting machine into a predetermined size, while generating foam scraps. The scraps are reduced in volume by thermal shrinking or remelting and pelletizing with an extruder and are recycled as a material. Such recycling is common for a person skilled in the art. Patent Document 2 discloses that alkyl phosphite and epoxy compounds are effective in preventing flame retardants from decomposing at the time of recycling and resins from forming gels. However, the addition of a stabilizer is likely to lower the flame retardancy of a flame retardant as described above. Consequently, the flame retardant is required to be added in a larger amount in order to achieve intended flame retardancy, and this becomes a disadvantage in terms of cost.

Patent Document 3 discloses a method for producing a styrenic resin extruded foam that contains an inorganic compound and an organic bromine compound and contains a particular amount of a polyglycerol fatty acid ester. The method enables the production of a styrenic resin foam that particularly contains a large amount of the inorganic compound and has high thermal insulation properties, high combustibility, and an excellent appearance. However, there is no disclosure of producing a foam that is repeatedly recycled and maintains substantially the same thermal insulation properties and combustibility.

Patent Document 4 discloses a process for extruding a polystyrene foam composition comprising as main component polystyrene, an epoxy compound, a brominated flame retardant, which can be a brominated aliphatic copolymer, and a phenol antioxidant. A certain amount of scrap polystyrene foam can be fed back into the extrusion foaming process.

As described above, the technique of producing a styrenic resin extruded foam that has thermal stability, flame retardancy, and thermal insulation properties in a balanced manner and can be repeatedly recycled has not been completed.

Citation List

Patent Literatures

Patent Document 1: International Publication WO 2007/058736
Patent Document 2: International Publication WO 2010/080285
Patent Document 3: JP-A No. 2008-163185
Patent Document 4: International Publication WO 2009/029290.

Summary of Invention

Technical Problem

In order to solve the problems of flame retardant styrenic resin extruded foams, it is an object of the present invention to provide a styrenic resin extruded foam having excellent thermal stability, flame retardancy, thermal insulation properties, and recyclability and a method for recycling the foam.

Solution to Problem

The inventors of the present invention have intensively studied to solve the problems, as a result, have found that a styrenic resin foam that is produced by melting and kneading a styrenic resin and a foaming agent in an extruder and extrusion-foaming the mixture into a low pressure area, contains an aliphatic bromine-containing polymer as a flame retardant, and further contains an epoxy compound (a), a polyhydric alcohol partial ester (b), a phenolic stabilizer (c), and a phosphite stabilizer (d) as stabilizers in predetermined amounts provides good moldability even when the styrenic resin extruded foam containing the flame retardant and the stabilizers is reduced in volume by thermal shrinking and/or thermal melting and is recycled, and a resulting recycled foam passes the burning test in accordance with JIS A9511 and/or shows such a flame retardancy that the oxygen index is 26% or more and can satisfy various characteristics as a foam, such as thermal insulation properties, and have accomplished the present invention.

In other words, the present invention relates to

[1] a styrenic resin extruded foam produced by extrusion-foaming a styrenic resin and a foaming agent,
the styrenic resin containing 1 to 75% by weight of a recycled styrenic resin (hereinafter called recycled styrenic resin 2) that has been reduced in volume by thermal shrinking and/or thermal melting of a styrenic resin foam,
the styrenic resin extruded foam containing an aliphatic bromine-containing polymer as a flame retardant,
the styrenic resin extruded foam further containing
an epoxy compound (a) in an amount of 4 to 20 parts by weight,
a polyhydric alcohol partial ester (b) in an amount of 0 to 20 parts by weight,
a phenolic stabilizer (c) in an amount of 4 to 20 parts by weight, and
a phosphite stabilizer (d) in an amount of 0 to 0.9 parts by weight, relative to 100 parts by weight of the flame retardant, as stabilizers,
the styrenic resin extruded foam satisfying Expressions (1) and (2):

$$0 \leq X \leq 20, \text{ when } T \leq 180 \qquad \dots \text{(Expression 1)}$$

$$4 \leq X \leq 20, \text{ when } 180 < T \leq 240 \qquad \dots \text{(Expression 2)}$$

where X is an amount (parts by weight) of the polyhydric alcohol partial ester (b) relative to 100 parts by weight

of the flame retardant, and T is a processing temperature (°C) at which the recycled styrenic resin 2 has been subjected to volume reduction,
the styrenic resin extruded foam passing burning test in accordance with JIS A9511 and/or having an oxygen index of 26% or more;

[2] the styrenic resin extruded foam according to the aspect [1], in which the aliphatic bromine-containing polymer is a brominated (styrene-butadiene block copolymer);
[3] the styrenic resin extruded foam according to the aspect [1] or [2], in which the aliphatic bromine-containing polymer is contained in an amount of 0.5 to 5 parts by weight relative to 100 parts by weight of the styrenic resin;
[4] the styrenic resin extruded foam according to any one of the aspects [1] to [3], in which the epoxy compound is at least one compound selected from the group consisting of bisphenol A diglycidyl ether epoxy resins represented by Structural Formula (1):

[C. 1]

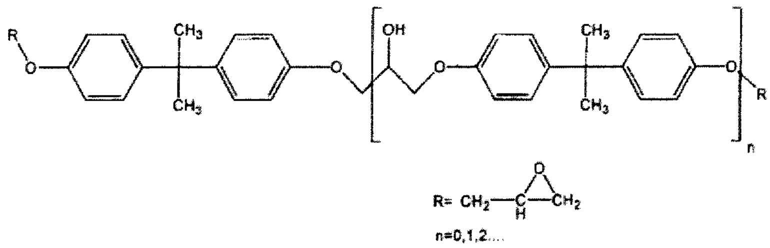

(Structural Formula 1)

, cresol novolac epoxy resins represented by Structural Formula (2):

[C. 2]

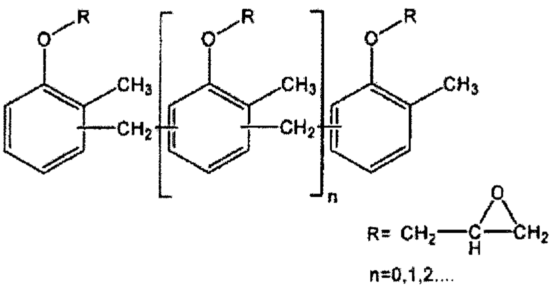

(Structural Formula 2)

,

, and phenol novolac epoxy resins represented by Structural Formula (3):

[C. 3]

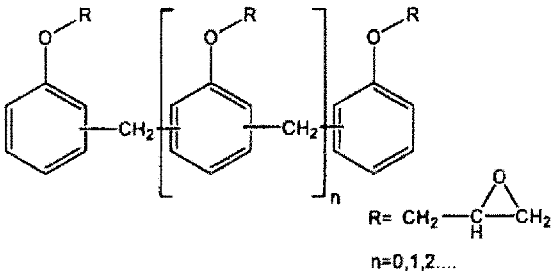

(Structural Formula 3)

;

[5] the styrenic resin extruded foam according to any one of the aspects [1] to [4], in which the polyhydric alcohol partial ester is a reaction product of dipentaerythritol and adipic acid;

[6] the styrenic resin extruded foam according to any one of the aspects [1] to [5], in which the phosphite stabilizer is at least one compound selected from the group consisting of 3,9-bis(2,4-di-tert-butylphenoxy)-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, and tetrakis(2,4-di-tert-butyl-5-methylphenyl)-4,4'-biphenylene diphosphonite);

[7] the styrenic resin extruded foam according to any one of the aspects [1] to [6], further including a radical generator in an amount of 0.05 to 0.5 parts by weight relative to 100 parts by weight of the styrenic resin;

[8] the styrenic resin extruded foam according to the aspect [7], in which the radical generator is at least one compound selected from the group consisting of 2,3-dimethyl-2,3-diphenylbutane and poly-1,4-diisopropylbenzene;

[9] the styrenic resin extruded foam according to any one of the aspects [1] to [8], further including at least one compound selected from the group consisting of phosphoric acid esters and phosphine oxides relative to 100 parts by weight of the styrenic resin;

[10] the styrenic resin extruded foam according to the aspect [9], in which the phosphoric acid ester is at least one compound selected from the group consisting of triphenyl phosphate and tris(tribromoneopentyl) phosphate, and the phosphine oxide is triphenylphosphine oxide;

[11] the styrenic resin extruded foam according to any one of the aspects [1] to [10], in which the foaming agent includes at least one compound selected from saturated hydrocarbons having a carbon atom number of 3 to 5;

[12] the styrenic resin extruded foam according to the aspect [11], in which the foaming agent further includes at least one agent selected from the group consisting of water, carbon dioxide, nitrogen, alcohols having a carbon atom number of 2 to 5, dimethyl ether, methyl chloride, and ethyl chloride;

[13] the styrenic resin extruded foam according to any one of the aspects [1] to [12], further including at least one heat ray radiation suppressor selected from the group consisting of graphite, carbon black, aluminum pastes, titanium oxide, and barium sulfate;

[14] the styrenic resin extruded foam according to any one of the aspects [1] to [13], in which bubbles constituting the foam mainly include bubbles having a bubble diameter of 0.2 mm or less and bubbles having a bubble diameter of 0.25 to 1 mm;

[15] the styrenic resin extruded foam according to the aspect [14], in which, of the bubbles constituting the foam, the bubbles having a bubble diameter of 0.2 mm or less have an occupying area ratio of 5 to 95% in a cross-sectional area of the foam; and

[16] a method for recycling a styrenic resin extruded foam, the method including extrusion-foaming a styrenic resin containing a recycled styrenic resin and a foaming agent to yield a styrenic resin extruded foam,

the styrenic resin containing 1 to 75% by weight of a recycled styrenic resin 2 that has been reduced in volume by thermal shrinking and/or thermal melting of a styrenic resin foam,

the styrenic resin extruded foam containing an aliphatic bromine-containing polymer as a flame retardant,

the styrenic resin extruded foam further containing

an epoxy compound (a) in an amount of 4 to 20 parts by weight,

a polyhydric alcohol partial ester (b) in an amount of 0 to 20 parts by weight,

a phenolic stabilizer (c) in an amount of 4 to 20 parts by weight, and

a phosphite stabilizer (d) in an amount of 0 to 0.9 parts by weight, relative to 100 parts by weight of the flame retardant, as stabilizers,

the styrenic resin extruded foam satisfying Expressions (1) and (2):

$$0 \leq X \leq 20, \text{ when } T \leq 180 \quad \ldots \text{(Expression 1)}$$

$$4 \leq X \leq 20, \text{ when } 180 < T \leq 240 \quad \ldots \text{(Expression 2)}$$

where X is an amount (parts by weight) of the polyhydric alcohol partial ester (b) relative to 100 parts by weight of the flame retardant, and T is a processing temperature (°C) at which the recycled styrenic resin 2 has been subjected to volume reduction.

Advantageous Effects of Invention

The styrenic resin extruded foam of the present invention is produced by using a material containing a recycled styrenic resin that has been reduced in volume by thermal shrinking and/or thermal melting, has good moldability even when repeatedly recycled, and can yield a styrenic resin extruded foam having excellent flame retardancy, thermal stability, and thermal insulation properties.

Brief Description of Drawings

Fig. 1 is a graph showing changes in weight average molecular weight retention ratio of extruded foams of Examples 1 to 6 of the present invention with respect to the number of recycling times of the foams.
Fig. 2 is a graph showing changes in weight average molecular weight retention ratio of extruded foams of Examples 7 to 9 of the present invention with respect to the number of recycling times of the foams.
Fig. 3 is a graph showing changes in weight average molecular weight retention ratio of extruded foams of Comparative Examples 1 to 6 of the present invention with respect to the number of recycling times of the foams.
Fig. 4 is a graph showing changes in weight average molecular weight retention ratio of extruded foams of Comparative Examples 7 to 9 of the present invention with respect to the number of recycling times of the foams.

Description of Embodiments

Embodiments of the present invention will next be described. The present embodiments are merely a part of the present invention, and the embodiments can be appropriately changed without departing from the scope of the invention.

A styrenic resin extruded foam pertaining to the present invention is produced by extrusion-foaming a styrenic resin and a foaming agent. The styrenic resin used in the present invention is a common styrenic resin containing 1 to 75% by weight of a recycled styrenic resin (recycled styrenic resin 2) that has been reduced in volume by a predetermined heat treatment and containing a virgin styrenic resin and the recycled styrenic resin 1 described later as the remaining components.

[Styrenic Resin]

The styrenic resin used in the present invention is not limited to particular resins and is exemplified by homopolymers of styrenic monomers such as styrene, methylstyrene, ethylstyrene, isopropylstyrene, dimethylstyrene, bromostyrene, chlorostyrene, vinyltoluene, and vinylxylene and copolymers of two or more of the monomers; and copolymers prepared by copolymerization of the styrenic monomer with at least one monomer of divinylbenzene, butadiene, acrylic acid, methacrylic acid, methyl acrylate, methyl methacrylate, acrylonitrile, maleic anhydride, itaconic anhydride, and similar monomers.

The monomer to be copolymerized with the styrenic monomer, such as acrylic acid, methacrylic acid, methyl acrylate, methyl methacrylate, maleic anhydride, and itaconic anhydride, can be used within such an amount that a compressive strength and other physical properties of the styrenic resin extruded foam to be produced are not impaired.

The styrenic resin used in the present invention is not limited to the homopolymers or the copolymers of the styrenic monomers, and may be a blend of the homopolymers or the copolymers of the styrenic monomers and a homopolymer or a copolymer of the other monomers, and a diene rubber reinforced polystyrene or an acrylic rubber reinforced polystyrene may be blended.

The styrenic resin used in the present invention may be a styrenic resin having a branched structure for the

purpose of adjusting a melt flow rate (hereinafter called MFR) and a melt viscosity and melt tension at the time of molding, for example.

Among these styrenic resins, for example, styrene homopolymers, styrene-acrylonitrile copolymers, (meth)acrylic acid-copolymerized polystyrene, maleic anhydride-modified polystyrene, and high-impact polystyrene are preferred from the viewpoint of extrusion foam moldability and similar properties. Specifically preferred are styrene homopolymers in terms of cost efficiency.

[Recycled Styrenic Resin 1]

The styrenic resin used in the present invention is not limited to virgin styrenic resins and may be styrenic resins recycled from styrenic resin foams such as EPS for fish boxes, cushioning materials for home electric appliances, and expanded polystyrene for food trays or polystyrene trays as interior materials of refrigerators. Hereinafter, such a material is called recycled styrenic resin 1.

The recycled styrenic resin 1 in the present invention is preferably used at a ratio of 100 parts by weight or less relative to 100 parts by weight of the virgin styrenic resin. If the recycled styrenic resin 1 is contained at a ratio of more than 100 parts by weight, various physical properties of the styrenic resin extruded foam may be greatly affected by physical properties of the recycled styrenic resin 1. The virgin styrenic resin and the recycled styrenic resin 1 used in the present invention preferably have a MFR of 1 to 15 g/10 min from the viewpoint that moldability is excellent at the time of extrusion foam molding, the discharge rate at the time of molding and the thickness, width, and density or closed cell ratio of a resulting styrenic resin foam are easily adjusted to intended values, a styrenic resin foam having excellent foamability (as the thickness, width, density, closed cell ratio, surface nature, and other properties of a foam are more easily adjusted, the foamability becomes better), an excellent appearance, and the like can be produced, and a styrenic resin foam having well-balanced characteristics such as mechanical strengths including compressive strength, bending strength, and bending deflection and toughness can be produced. The styrenic resin more preferably has a MFR of 2 to 12 g/10 min in order to suppress shear heat generated during melt kneading in an extruder as much as possible. In the present invention, the MFR is a value determined by the method A in the test condition H in accordance with JIS K7210 (1999).

[Recycled Styrenic Resin 2]

Separately from the recycled styrenic resin 1, cutting scraps generated in a finish cutting step or a similar step of a product composed of an extruded foam molded article and scraps of an extruded foam molded article generated during start-up of extruding can also be used as the material of the present invention. These scraps of an extruded foam molded article may be placed in an extruder without any treatment, but have an excessively small bulk specific gravity, and thus are usually preferably subjected to volume reduction in order to be easily placed in an extruder. The recycled styrenic resin 2 used in the present invention is a resin that has been subjected to the volume reduction and is used as the material. The method for the volume reduction can be classified, on the basis of a processing method and a temperature for the volume reduction, into shrinkage and volume reduction with a hot-air drying furnace or a similar apparatus and volume reduction of pelletization by melting and kneading with a single screw extruder, a twin screw extruder, or a similar apparatus. The processing temperature during the volume reduction is preferably such a temperature that the molecular degradation of a resin including effects on a flame retardant and the like are suppressed as much as possible. For example, for the shrinkage and volume reduction with a hot-air drying furnace, the processing temperature is preferably 180°C or less and specifically within a range of 120 to 180°C. For the pelletization by melting and kneading with an extruder or a similar apparatus, the processing temperature is preferably 240°C or less and specifically more than 180°C and not more than 240°C.

In the present invention, the recycled styrenic resin 2 is used in an amount of 1 to 75% by weight, preferably 1 to 50% by weight, and more preferably 25 to 50% by weight relative to the total amount of the virgin styrenic resin, the recycled styrenic resin 1, and the recycled styrenic resin 2, or the total amount of styrenic resins used as the material resins for extrusion foam molding. If the recycled styrenic resin 2 is contained in a larger amount, cutting scraps generated in a finish cutting step of a product and the like are increasingly recycled and production cost can be reduced, but if the recycled styrenic resin 2 is contained in an amount of more than 75% by weight in the material resins, the moldability, enlarged cells, or the like of a foam is likely to deteriorate the thermal insulation properties or the like.

[Flame Retardant]

The styrenic resin extruded foam of the present invention contains an aliphatic bromine-containing polymer as a flame retardant, thus can meet the flame retardancy required in JIS A9511, and can satisfy an oxygen index of 26% or more.

Examples of the aliphatic bromine-containing polymer used in the present invention include brominated (styrene-butadiene block copolymers), brominated styrene-butadiene random copolymers, brominated styrene-butadiene graft polymers, brominated butadiene polymers, and brominated, epoxidized styrene-butadiene block copolymers. These polymers may be used singly or in combination of two or more of them. Among them, brominated (styrene-butadiene block copolymers) are preferred from the viewpoint of performances, cost efficiency, and supply stability.

In the present invention, the amount of the aliphatic bromine-containing polymer is preferably 0.5 to 10 parts by weight relative to 100 parts by weight of the styrenic resin and, from the viewpoint of cost efficiency and effects on other required various physical properties, the amount is more preferably in a range of 0.5 to 5 parts by weight.

[Epoxy Compound]

In the present invention, the addition of an epoxy compound as a stabilizer enables an improvement in thermal stability without impairing the flame retardancy of the flame retardant.

From the viewpoint of cost efficiency, performances, and supply stability, the epoxy compound used in the present invention is preferably bisphenol A diglycidyl ether epoxy resins represented by Structural Formula (1):

[C. 4]

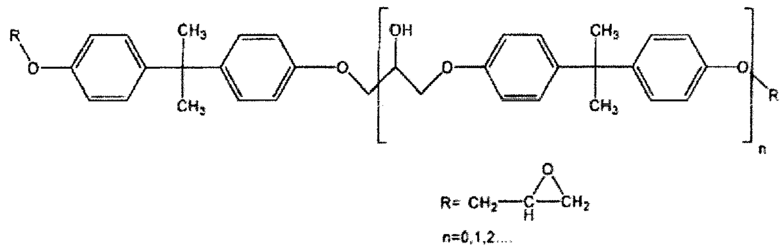

(Structural Formula 1)

,

cresol novolac epoxy resins represented by Structural Formula (2):

[C. 5]

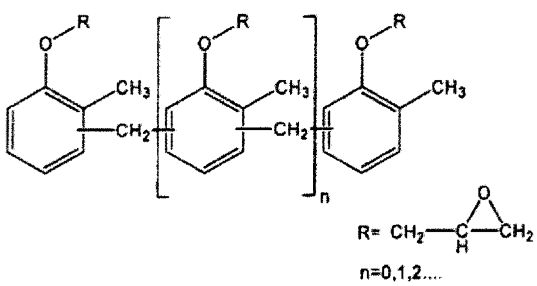

(Structural Formula 2)

, and
phenol novolac epoxy resins represented by Structural Formula (3):

[C. 6]

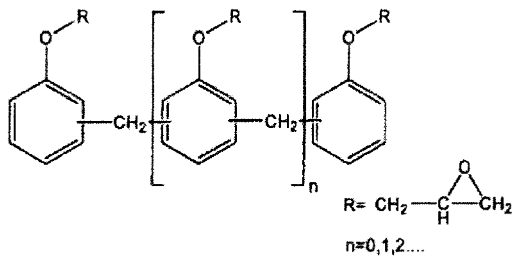

(Structural Formula 3)

The epoxy compound may be epoxy resins having a bisphenol A skeleton to which bromine atoms are added, represented by Structural Formula (4).

[C. 7]

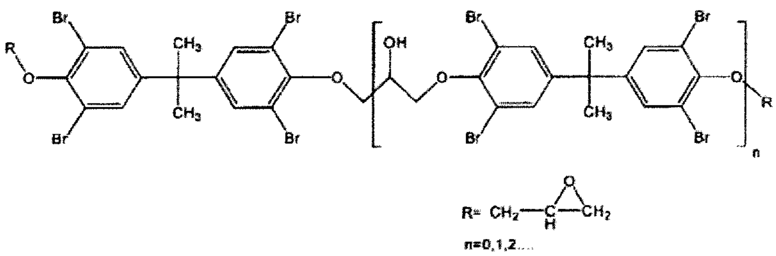

(Structural Formula 4)

These epoxy compounds may be used singly or as a mixture of two or more of them.

The epoxy compound used in the present invention preferably has an epoxy equivalent of less than 1,000 g/eq. It is supposed that the epoxy group suppresses the decomposition of the bromine flame retardant and improves the thermal stability of the styrenic resin. An epoxy compound having an epoxy equivalent of 1,000 g/eq or more has an extremely low effect of suppressing the decomposition of the flame retardant. Consequently, such an epoxy compound is required to be added in a larger amount and thus is not realistic. From the viewpoint of the balance between cost efficiency and performances, the epoxy equivalent is more preferably less than 500 g/eq and even more preferably less than 400 g/eq.

In the present invention, the epoxy compound is contained in an amount of 4 to 20 parts by weight relative to 100 parts by weight of the bromine flame retardant. If contained in an amount of less than 4 parts by weight, the epoxy compound insufficiently provides the effect of stabilizing the flame retardant, and the flame retardant and the resin are likely to decompose to reduce the molecular weight of the resin. Consequently, bubbles constituting a foam have a larger bubble size, and the thermal insulation properties are likely to deteriorate. In addition, the reduction in molecular weight distribution is likely to cause the foam surface to have poor smoothness and to deteriorate the moldability. The decomposition of the flame retardant causes other additives or the resin to turn black, resulting in a poor appearance. During recycling of scraps generated at the time of cutting of products or the like by heat-melting and kneading, the flame retardant and the resin decompose, and thus the resin is likely to turn black and to have a lower molecular weight distribution. Consequently, the scraps are difficult to recycle, resulting in an increase in cost. If the epoxy compound is contained in an amount of more than 20 parts by weight, the stabilizer excessively provides the stabilization effect, thus the flame retardant cannot effectively decompose in case of burning of a foam, and the flame retardancy is likely to be lowered.

[Polyhydric Alcohol Partial Ester]

In the present invention, combination use of a polyhydric alcohol partial ester as a stabilizer enables an improvement in thermal stability of the flame retardant. In particular, the combination use can suppress the decomposition of the resin and the flame retardant even when the resin is repeatedly recycled, thereby giving a foam having excellent moldability, flame retardancy, and thermal insulation properties.

The polyhydric alcohol partial ester used in the present invention is a mixture of partial esters that are reaction

products of a polyhydric alcohol such as pentaerythritol, dipentaerythritol, and tripentaerythritol with a monovalent carboxylic acid such as acetic acid and propionic acid or a divalent carboxylic acid such as adipic acid and glutamic acid and are compounds having one or more hydroxy groups in the molecule, and may contain a material polyhydric alcohol in a small amount.

Specific examples of the polyhydric alcohol partial ester include a partial ester of dipentaerythritol and adipic acid, or Plenlizer (registered trademark) ST-210 manufactured by Ajinomoto Fine-Techno Co., Inc.

In the present invention, the amount X (parts by weight) of the polyhydric alcohol partial ester is preferably 0 to 20 parts by weight relative to 100 parts by weight of the flame retardant. The amount X (parts by weight) of the polyhydric alcohol partial ester is determined in accordance with Expressions (1) and (2) depending on the processing temperature T (°C) at which the recycled styrenic resin 2 has been obtained by volume reduction.

$$0 \leq X \leq 20, \text{ when } T \leq 180 \qquad \text{... Expression (1)}$$

$$4 \leq X \leq 20, \text{ when } 180 < T \leq 240 \qquad \text{...Expression (2)}$$

As in the case of shrinkage and volume reduction with a hot-air drying furnace or a similar apparatus, when the processing temperature for the volume reduction of scraps is sufficiently lower than a decomposition temperature of the bromine-containing polymer as the flame retardant, the polyhydric alcohol partial ester is not indispensable as shown in Expression (1).

As in the case of pelletization by melting and kneading with a single screw extruder, a twin screw extruder, or a similar apparatus, when the processing temperature condition for the volume reduction is close to a decomposition temperature range of the flame retardant, the amount of the polyhydric alcohol partial ester is preferably 4 to 20 parts by weight as shown in Expression (2). If contained in an amount of less than 4 parts by weight, the polyhydric alcohol partial ester is likely to provide a small thermal stabilization effect.

In each case, if contained in an amount of more than 20 parts by weight, the polyhydric alcohol partial ester may excessively provide the stabilization effect to lower the flame retardancy by the flame retardant itself.

[Phenolic Stabilizer]

In the present invention, combination use of a phenolic stabilizer enables an improvement in thermal stability without impairing the flame retardancy of the flame retardant.

The phenolic stabilizer used in the present invention is not limited to particular substances, and commercially available substances can be used. Specific examples of the phenolic stabilizer include triethylene glycol-bis-3-(3-t-butyl-4-hydroxy-5-methylphenyl)propionate, pentaerythritol tetrakis[3-(3',5'-di-tert-butyl-4'-hydroxyphenyl)propionate], and octadecyl 3-(3,5-di-tert-butyl-4-hydroxyphenyl)propionate. These compounds may be used singly or in combination of two or more of them. Among them, pentaerythritol tetrakis[3-(3',5'-di-tert-butyl-4'-hydroxyphenyl)propionate] is preferably used in terms of prices and performances.

In the present invention, the phenolic stabilizer is contained in an amount of 4 parts by weight to 20 parts by weight relative to 100 parts by weight of the flame retardant. If contained in an amount of more than 20 parts by weight, the phenolic stabilizer affects the bubble formation in a foam, and the moldability and the thermal insulation properties are likely to be difficult to control. If contained in an amount of less than 4 parts by weight, the phenolic stabilizer may insufficiently provide the effect of stabilizing the flame retardant.

[Phosphite Stabilizer]

In the present invention, combination use of a phosphite stabilizer enables an improvement in thermal stability without impairing the flame retardancy of the flame retardant.

The phosphite stabilizer used in the present invention is preferably exemplified by 3,9-bis(2,4-di-tert-butylphenoxy)-2,4,8,10-tetraoxa-3,9-diphosphaspiro[5.5]u ndecane, 3,9-bis(2,6-di-tert-butyl-4-methylphenoxy)-2,4,8,10-tetraoxa-3,9-diphosphas piro[5.5]undecane, and tetrakis(2,4-di-tert-butyl-5-methylphenyl)-4,4'-biphenylene diphosphonite) from the viewpoint that such a compound does not reduce the flame retardancy of a foam but can improve the thermal stability of the foam.

In the present invention, the phosphite stabilizer is contained in an amount of 0.9 parts by weight or less relative to 100 parts by weight of the flame retardant. If contained in an amount of more than 0.9 parts by weight, the phosphite stabilizer may excessively provide the stabilization effect to lower the flame retardancy by the flame retardant itself.

[Radical Generator]

In the present invention, combination use of a radical generator enables an improvement in flame retardancy of the styrenic resin extruded foam.
Examples of the radical generator used in the present invention include 2,3-dimethyl-2,3-diphenylbutane, poly-1,4-diisopropylbenzene, 2,3-diethyl-2,3-diphenylbutane, 3,4-dimethyl-3,4-diphenylhexane, 3,4-diethyl-3,4-diphenylhexane, 2,4-diphenyl-4-methyl-1-pentene, and 2,4-diphenyl-4-ethyl-1-pentene, and also include peroxides such as dicumyl peroxide.
Among them, compounds stable in resin processing temperature conditions are preferred, and 2,3-dimethyl-2,3-diphenylbutane and poly-1,4-diisopropylbenzene are specifically preferred.
In the present invention, the radical generator is preferably contained in an amount of 0.05 to 0.5 parts by weight relative to 100 parts by weight of the styrenic resin.

[Phosphorus Flame Retardant]

In the present invention, for the purpose of further improving the flame retardancy, phosphorus flame retardants such as phosphoric acid esters and phosphine oxides can be used in combination to such an extent that the thermal stability is not impaired.
Examples of the phosphoric acid ester phosphorus flame retardant used in the present invention include triphenyl phosphate, tricresyl phosphate, trixylenyl phosphate, cresyl diphenyl phosphate, 2-ethylhexyl diphenyl phosphate, trimethyl phosphate, triethyl phosphate, tributyl phosphate, tris(2-ethylhexyl) phosphate, tris(butoxyethyl) phosphate, condensed phosphoric acid esters, and halogen-containing phosphoric acid esters such as tris(tribromoneopentyl) phosphate. Specifically, triphenyl phosphate and tris(tribromoneopentyl) phosphate are preferred.
The phosphine oxide phosphorus flame retardant used in the present invention is preferably triphenylphosphine oxide.
These phosphoric acid esters and phosphine oxides may be used singly or in combination of two or more of them.
In the present invention, the phosphorus flame retardant is preferably contained in an amount of 0 to 2 parts by weight relative to 100 parts by weight of the styrenic resin.

[Foaming Agent]

The foaming agent used in the present invention is not limited to particularly agents, but the use of saturated hydrocarbons having a carbon atom number of 3 to 5 allows a resulting extruded foam to have excellent environmental acceptability.
Examples of the saturated hydrocarbon having a carbon atom number of 3 to 5 used in the present invention include propane, n-butane, i-butane, n-pentane, i-pentane, and neopentane. Among these saturated hydrocarbons having a carbon atom number of 3 to 5, propane, n-butane, i-butane, and mixtures thereof are preferred from the viewpoint of foamability. From the viewpoint of thermal insulation properties of a foam, n-butane, i-butane, and mixtures thereof are preferred, and i-butane is particularly preferred.
From the viewpoint of an improvement in thermal conductivity of a foam, i-butane is preferably contained in an amount of 2.5 to 4.0 parts by weight relative to 100 parts by weight of the styrenic resin. However, addition of a large amount of i-butane, which is a combustible gas, is likely to deteriorate the flame retardancy of a foam. In order to keep the balance between thermal conductivity and flame retardancy, the amount is preferably 2.7 to 3.7 parts by weight relative to 100 parts by weight of the styrenic resin.
In the present invention, use of an additional foaming agent provides a plasticization effect and an assistant foaming effect on a styrenic resin during the production of a foam and reduces the extrusion pressure, enabling stable production of a foam. However, depending on an intended expansion ratio and various characteristics of a foam, such as flame retardancy, the amount and the like may be limited, and the extrusion foam moldability and the like may be insufficient.
Examples of the additional foaming agent used in the present invention include
organic foaming agents including ethers such as dimethyl ether, diethyl ether, methyl ethyl ether, isopropyl ether, n-butyl ether, diisopropyl ether, furan, furfural, 2-methylfuran, tetrahydrofuran, and tetrahydropyran; ketones such as dimethyl ketone, methyl ethyl ketone, diethyl ketone, methyl n-propyl ketone, methyl n-butyl ketone, methyl i-butyl ketone, methyl n-amyl ketone, methyl n-hexyl ketone, ethyl n-propyl ketone, and ethyl n-butyl ketone; saturated alcohols having a carbon atom number of 1 to 4 such as methanol, ethanol, propyl alcohol, i-propyl alcohol, butyl alcohol, i-butyl alcohol, and t-butyl alcohol; carboxylic acid esters such as methyl formate, ethyl formate, propyl formate, butyl formate, amyl formate, methyl propionate, and ethyl propionate; halogenated alkyls such as methyl chloride and ethyl chloride; and trans-1,3,3,3-tetrafluoroprop-1-ene;

inorganic foaming agents such as water and carbon dioxide; and
chemical foaming agents such as azo compounds and tetrazole. These additional foaming agents may be used singly or as a mixture of two or more of them.

Among these additional foaming agents, for example, saturated alcohols having a carbon atom number of 1 to 4, dimethyl ether, diethyl ether, methyl ethyl ether, methyl chloride, and ethyl chloride are preferred from the viewpoint of foamability, foam moldability, and the like. From the viewpoint of the combustibility of the foaming agents, the flame retardancy of a foam, or the thermal insulation properties described later, water and carbon dioxide are preferred. From the viewpoint of a plasticization effect, dimethyl ether is preferred, and from the viewpoint of cost efficiency and an improvement effect of the thermal insulation properties by the control of bubble diameters, water is preferred.

In the present invention, the foaming agent is preferably contained in an amount of 2 to 20 parts by weight and more preferably 4 to 10 parts by weight relative to 100 parts by weight of the styrenic resin. If contained in an amount of less than 2 parts by weight, the foaming agent provides a small expansion ratio, and thus a resulting resin foam may be difficult to obtain characteristics such as lightweight and a heat-insulating performance. If contained in an amount of more than 20 parts by weight, the foaming agent is excessively contained, and thus a resulting foam may have voids and other defects.

[Bubble Diameter]

In the present invention, the use of water as the additional foaming agent enables the production of a styrenic resin extruded foam having a characteristic bubble structure in which bubbles (hereinafter called small bubbles) having a comparatively small bubble diameter of about 0.2 mm or less and bubbles (hereinafter called large bubbles) having a comparatively large bubble diameter of about 0.25 to 1 mm are present in a sea-island manner in the foam, and thus allows the resulting foam to have higher thermal insulation properties.

In the foam having a particular bubble structure in which the small bubbles having a bubble diameter of 0.2 mm or less and large bubbles having a bubble diameter of 0.25 to 1 mm are mixed, the ratio of area occupied by the small bubbles (occupying area ratio of small bubbles per unit cross-sectional area, hereinafter called "small bubble occupying area ratio") in a cross-sectional area of the foam is preferably 5 to 95%, more preferably 10 to 90%, even more preferably 20 to 80%, and particularly preferably 25 to 70%.

[Water-Absorbing Substance]

In the present invention, when water is used as the additional foaming agent, a water-absorbing substance is preferably added for stable extrusion foam molding. Specific examples of the water-absorbing substance used in the present invention include water absorbing polymers such as hydroxyethyl cellulose, polyacrylate polymers, starch-acrylic acid graft copolymers, polyvinyl alcohol polymers, vinyl alcohol-acrylate copolymers, ethylene-vinyl alcohol copolymers, acrylonitrile-methyl methacrylate-butadiene copolymers, polyethylene oxide copolymers, and derivatives thereof; water absorbable or water swellable layered silicates and organized products thereof, including fine particles having a particle size of 1,000 nm or less and having a hydroxy group on the surface, such as anhydrous silica (silicon dioxide) having a silanol group on the surface [for example, "AEROSIL (registered trademark)" manufactured by Nippon Aerosil Co., Ltd. is commercially available], smectite, and swellable fluorine mica; and porous substances such as zeolite, active carbon, alumina, silica gel, porous glass, activated clay, and diatomaceous earth.

In the present invention, the amount of the water-absorbing substance is appropriately adjusted in accordance with the amount of water added and the like, and is preferably 0.01 to 5 parts by weight and more preferably 0.1 to 3 parts by weight relative to 100 parts by weight of the styrenic resin.

[Heat Ray Radiation Suppressor]

In the present invention, for the purpose of improving the thermal insulation properties of the foam, a heat ray radiation suppressor can be added to yield a foam having high thermal insulation properties. Here, the heat ray radiation suppressor is a substance having characteristics of reflecting, scattering, or absorbing light in a near-infrared or infrared region (for example, in a wavelength region of about 800 to 3,000 nm).

Examples of the heat ray radiation suppressor in the present invention include graphite, carbon black, aluminum paste, titanium oxide, and barium sulfate. These heat ray radiation suppressors may be used singly or in combination of two or more of them.

Among these heat ray radiation suppressors, from the viewpoint of the effect of suppressing heat ray radiation, graphite, carbon black, and aluminum paste are preferred, and graphite is specifically preferred.

[Additive]

In the present invention, process aids such as fatty acid metal salts, fatty acid amides, fatty acid esters, liquid paraffin, and olefinic waxes and additives such as flame retardants other than the above-mentioned flame retardants, flame retardant auxiliaries, antioxidants, antistatic agents, and coloring agents including pigments can be added, as necessary, to such an extent that the effect of the invention is not impaired.

[Production of Styrenic Resin Extruded Foam, Recycling of Styrenic Resin Foam]

A method for producing a styrenic resin extruded foam and a method for recycling a styrenic resin foam of the present invention are performed by supplying styrenic resins including a recycled styrenic resin, a flame retardant, other additives, and the like to a heat-melting means such as an extruder, adding a foaming agent to the styrenic resin at any step in high pressure conditions to prepare a flowable gel, cooling the gel to a temperature suitable for extrusion foaming, and extrusion-foaming the flowable gel through a die into a low-pressure region, thereby forming a foam.

The heat-melting of the styrenic resin, the bromine flame retardant, the stabilizer, the other additives, and the like is exemplified by mixing the styrenic resin with the bromine flame retardant and the other additives and then heat-melting the mixture; heat-melting the styrenic resin, then adding the bromine flame retardant and the other additives, and mixing the whole; and previously mixing the styrenic resin with the bromine flame retardant, the stabilizer, and the other additives, then heat-melting the mixture to prepare a composition, and newly supplying the composition to an extruder to heat-melt the composition.

The heating temperature, the melting and kneading time, and the melting and kneading means for heat-melting and kneading the styrenic resin and additives such as the foaming agent are not limited to particular values or means.

The heating temperature may be any temperature higher than a melting temperature of a styrenic resin to be used, but is preferably such a temperature that the molecular degradation of a resin including effects on a flame retardant and the like are suppressed as much as possible, for example, about 160 to 240°C and more preferably 225°C or less.

The melting and kneading time varies with extrusion output per unit time, melting and kneading means, and the like and thus is not unequivocally set, and a time required for uniform dispersion and mixing of the styrenic resin and the foaming agent is appropriately selected.

Examples of the melting and kneading means include a screw extruder, and a means used for common extrusion foaming can be used without any limitation.

The foam molding method is not limited to particular methods, and may be, for example, a common method in which a foam obtained by pressure-release from a slit die is molded with, for example, a mold and a forming roll disposed in close contact with or in contact with the slit die to form a plate-like foam having a larger cross-sectional area.

The styrenic resin extruded foam of the present invention may have any thickness, which is appropriately set depending on an application. For example, for a heat insulating material used for construction materials and similar applications, the material preferably has a certain thickness as with common plate-like materials in order to obtain preferred thermal insulation properties, bending strength, and compressive strength, and the thickness is commonly 10 to 150 mm and preferably 20 to 100 mm.

The styrenic resin extruded foam of the present invention preferably has a density of 15 to 50 kg/$m^3$ and more preferably 25 to 40 kg/$m^3$ in order to obtain lightweight properties and excellent thermal insulation properties, bending strength, and compressive strength.

The styrenic resin extruded foam of the present invention may be used for any applications, and is preferably used as heat insulating materials for construction materials from the viewpoint of excellent thermal stability, flame retardancy, and thermal insulation properties.

Examples

Next, the styrenic resin extruded foam and the method for recycling the foam of the present invention will be described in further detail with reference to examples, but the present invention is not limited to the examples.

Materials used in Examples and Comparative Examples are as shown below.

(A) Styrenic resin

- Virgin styrenic resin
  [680 manufactured by PS Japan Corporation: MFR = 7.0 g/10 min]
- Virgin styrenic resin

[G9401 manufactured by PS Japan Corporation: MFR = 2.0 g/10 min]

- Recycled styrenic resin 1
  [SOP (fish box recycled EPS) manufactured by MEINO Co. Ltd.: MFR = 8.0 g/10 min]

(B) Flame retardant

- Brominated (styrene-butadiene block copolymer)
  [EMERALD INNOVATION 3 000 manufactured by Chemtura]

(C) Epoxy compound

- Bisphenol-A-glycidyl ether epoxy resin
  [EP-13 manufactured by ADEKA CORPORATION, an epoxy equivalent of 180 to 200 g/eq.]
- Cresol novolac epoxy resin
  [ECN-1280 manufactured by Huntsman Japan, an epoxy equivalent of 212 to 233 g/eq.]

(D) Polyhydric alcohol partial ester

- Dipentaerythritol-adipic acid reaction mixture
  [Plenlizer (registered trademark) ST-210 manufactured by Ajinomoto Fine-Techno Co., Inc.]

(E) Phenolic stabilizer

- Pentaerythritol tetrakis[3-(3',5'-di-tert-butyl-4'-hydroxyphenyl)propionate]
  [ANOX20 manufactured by Chemtura]

(F) Phosphite stabilizer

- 3,9-Bis(2,4-di-tert-butylphenoxy)-2,4,8,10-tetraoxa-3,9-diphosphaspiro[5.5]u ndecane
  [Ultranox (registered trademark) 626 manufactured by Chemtura]

(G) Radical generator

- Poly-1,4-diisopropylbenzene
  [CCPIB manufactured by UNITED INITIATORS]

(H) Phosphorus flame retardant

- Triphenylphosphine oxide [Sumitomo Shoji Chemicals Co., Ltd.]

(I) Heat ray radiation suppressor

- Graphite [PS-85 (a primary particle diameter of 10.5 μm, a fixed carbon of 85%) manufactured by Nishimura Graphite Co., Ltd.]
- Titanium oxide [R-7E manufactured by Sakai Chemical Industry Co., Ltd.]

(J) Foaming agent

- Isobutane [manufactured by Mitsui Chemicals, Inc.]
- Odorless butane [manufactured by Iwatani Corporation, n-butane:i-butane = 65:35 (mole)]
- Water [tap water]
- Dimethyl ether [manufactured by Mitsui Chemicals, Inc.]

(K) Other additives

- Talc [Talcan Powder PK-Z manufactured by Hayashi-Kasei Co., Ltd.]
- Bentonite [Bengel Bright 11K manufactured by HOJUN Co., Ltd.]
- Silica [Carplex (registered trademark) BS304F manufactured by Evonik Degussa Japan Co., Ltd.]

Evaluations in Examples and Comparative Examples were performed by the following methods.

(1) Foam density

The foam density was calculated in accordance with the equation, foam density ($g/cm^3$) = foam weight (g)/foam volume ($cm^3$), in terms of $kg/m^3$ as unit.

(2) JIS combustibility

An obtained sample was allowed to stand in a room, and on day 7 after the production, the foam was subjected to measurement in accordance with JIS A9511.
○: The following standards are satisfied: a flame disappears within 3 seconds; no afterglow; and burning does not exceed the combustion limit indication line.
×: The standards are not satisfied.

(3) Oxygen index

The oxygen index of a foam was determined by the method in accordance with JIS K 7201:1999.

(4) Small bubble occupying area ratio

For an extruded foam in which large bubbles and small bubbles are mixed in a sea-island manner as described in the paragraph [Bubble Diameter] in terms of bubble shapes, the occupying area ratio of bubbles having a bubble diameter of 0.2 mm or less in a foam cross-sectional area was determined in the following procedure. Here, the bubble having a bubble diameter of 0.2 mm or less is a bubble having a circle equivalent diameter of 0.2 mm or less.

a) A vertical cross section of a foam is photographed under a scanning electron microscope [manufactured by Hitachi, Ltd., product number: S-450] at a magnification of 30.
b) On the photograph, an OHP sheet is placed, and sections corresponding to bubbles having a diameter of larger than 7.5 mm in thickness direction (corresponding to bubbles larger than 0.2 mm in the actual dimension) are painted with a black ink and copied to the sheet (primary treatment).
c) The primary treated image is imported into an image processor [(manufactured by PIAS, product number: PIAS-II], and the deep color sections and the light color sections are identified, or whether sections are painted with the black ink is identified.
d) Of the deep color sections, sections having areas corresponding to a circle having a diameter of 7.5 mm or less, or sections having large dimensions in the thickness direction but having areas corresponding to a circle having a diameter of 7.5 mm or less are turned into light color, thereby correcting the deep color sections.

e) By using "FRACTAREA (area ratio)" of the image processing function, the area ratio of bubbles having a bubble diameter of 7.5 mm or less (the light color sections of the sections indicated by the deep color and the light color) in the whole image is calculated in accordance with the following equation.

$$\text{Small bubble occupying area ratio (\%)} = (1 - \text{area of deep color sections/area of whole image}) \times 100$$

(5) Bubble diameter

The bubble diameter of an obtained styrenic resin extruded foam was determined by the method in accordance with ASTM D 3567. For a foam in which large bubbles and small bubbles are mixed in a sea-island manner as described in the paragraph [Bubble Diameter], or a foam having a small bubble occupying area ratio of 5% more or, bubble diameters of only large bubbles having a bubble diameter of 0.25 mm or more were determined.

(6) Thermal conductivity

On day 7 after the production of a foam, the thermal conductivity of the styrenic resin extruded foam was determined in accordance with JIS A9511.

(7) Moldability

An extruded foam was visually observed and evaluated on the basis of the following evaluation standards.
○: No voids, wrinkles, protrusions, or foreign substances are observed on the extruded foam surface, and the foam has a good appearance.
×: Voids, wrinkles, protrusions, and foreign substances are markedly observed on the extruded foam surface, and the foam has a poor appearance.

(8) Weight average molecular weight retention ratio (hereinafter abbreviated as "Mw retention ratio") of foam

In order to evaluate the resin degradation degree associated with heat history in an extruder, the weight average molecular weight Mw of a foam obtained at each number of recycling times was determined by gel permeation chromatography in accordance with the following procedure.

a) Sample concentration: 2.5 mg/mL (solvent; chloroform)
b) Apparatus used: e2695 manufactured by Waters Corporation
c) Column used: GPC-K-806M manufactured by Shodex, two columns were directly connected
d) Measurement condition: temperature; 40°C, solvent; chloroform, sample injection volume; 50 μL, flow rate; 1.0 mL/min, detection method; UV (254 nm), standard polystyrene; "Shodex STANDARD SM-105" manufactured by Showa Denko K. K.

The weight average molecular weight Mw of a foam obtained at each number of recycling times was divided by the weight average molecular weight Mw of the foam when the number of recycling times was 0, and the calculated value was regarded as the Mw retention ratio of the foam at each number of recycling times and was evaluated.

(Example 1)

[Preparation of Resin Mixture]

To 100 parts by weight of a styrenic resin (680), a resin mixture composed of 3.0 parts by weight of a brominated SBS block copolymer (EMERALD INNOVATION 3000) as a flame retardant, 0.15 parts by weight of a cresol novolac epoxy resin (ARALDITE ECN-1280), 0.15 parts by weight of a bisphenol A glycidyl ether (EP-13) as epoxy compounds, 0.2 parts by weight of a polyhydric alcohol partial ester (Plenlizer ST210), 0.3 parts by weight of pentaerythritol tetrakis[3-(3',5'-di-tert-butyl-4'-hydroxyphenyl)propionate] (ANOX20) as a phenolic stabilizer, 0.015 parts by weight of 3,9-bis(2,4-di-tert-butylphenoxy)-2,4,8,10-tetraoxa-3,9-diphosphaspiro[5.5]u ndecane (Ultranox 626) as a phosphite stabilizer, 0.5 parts by weight of triphenylphosphine oxide as a phosphorus flame retardant, 0.1 parts by weight of poly-1,4-diisopropylbenzene as a radical generator, 0.1 parts by weight of calcium stearate, 0.5 parts by weight of talc, 0.5 parts

by weight of bentonite, and 0.2 parts by weight of silica was dry blended. The dry blended product was abbreviated as [GP].

[Preparation of Extruded Foam]

The obtained GP was supplied at about 800 kg/hr to an extruder in which a single screw extruder having a bore of 150 mm, a single screw extruder having a bore of 200 mm, and a cooler were connected in series. The resin mixture supplied to the first extruder was heated at a resin temperature of 225°C, melted or plasticized, and kneaded, and a foaming agent (0.7 parts by weight of water (tap water), 3.5 parts by weight of isobutane, and 2 parts by weight of dimethyl ether relative to 100 parts by weight of the styrenic resin) was pressed into the resin close to the end of the first extruder. Next, the resin was cooled to a resin temperature of 120°C in the second extruder connected to the first extruder and in the cooler, and was extrusion-foamed through a mouthpiece having a rectangular cross section with a thickness of 2 mm and a width of 400 mm provided at the end of a cooler into the atmosphere. The extruded foam was treated with a mold disposed in close contact with the mouthpiece and with forming rolls disposed at downstream of the mold, giving an extruded foam having a cross section shape with a thickness of 60 mm and a width of 1,000 mm. The foam was cut with a cutter into a thickness of 50 mm, a width of 910 mm, and a length of 1,820 mm. The foam was regarded as a foam when the number of recycling times was 0.

[Preparation of Recycled Resin]

Crushed foams by pulverization of the obtained foam with a crusher and cutting scraps generated by cutting the obtained foam with a cutter into predetermined dimensions were supplied into a single screw extruder having a bore of 120 mm and were heated at a resin temperature of about 230°C, melted or plasticized, and kneaded. A foaming agent remaining in the foam was removed in open vent conditions, and the resulting resin was discharged from a die and pelletized into strand cut pellets. The pellets are called [RP2-1] (recycled styrenic resin 2).

[Preparation of Recycled Resin-Containing Extruded Foam]

An extruded foam was obtained in the same procedure as in the above preparation of the extruded foam except that RP2-1 obtained as above and GP were supplied at a weight ratio of 50:50 at about 800 kg/hr to an extruder in which a single screw extruder having a bore of 150 mm, a single screw extruder having a bore of 200 mm, and a cooler were connected in series. The obtained foam was regarded as a foam when the number of recycling times was 1. Subsequently, recycling was repeated another four times in the same preparation conditions as for the recycled resin and the recycled resin-containing extruded foam. Table 1 shows the evaluation results of the obtained foams. Table 3 and Fig. 1 show the Mw retention ratios of the foams with respect to the number of recycling times of the foams.

(Examples 2 to 6)

Foams were obtained in the same procedure as in Example 1 except that the type and amount of a foaming agent, the types and amounts of a flame retardant and a flame retardant auxiliary, the type and amount of a stabilizer, and the types and amounts of other components were changed as shown in Table 1.

(Example 7)

To 100 parts by weight of a styrenic resin (680), a resin mixture composed of 3.0 parts by weight of a brominated SBS block copolymer (EMERALD INNOVATION 3000) as a flame retardant, 0.15 parts by weight of a cresol novolac epoxy resin (ARALDITE ECN-1280) and 0.15 parts by weight of a bisphenol A glycidyl ether (EP-13) as epoxy compounds, 0.3 parts by weight of pentaerythritol tetrakis[3-(3',5'-di-tert-butyl-4'-hydroxyphenyl)propionate] (ANOX20) as a phenolic stabilizer, 0.015 parts by weight of 3,9-bis(2,4-di-tert-butylphenoxy)-2,4,8,10-tetraoxa-3,9-diphosphaspiro[5.5]u ndecane (Ultranox 626) as a phosphite stabilizer, 0.2 parts by weight of poly-1,4-diisopropylbenzene as a radical generator, 0.1 parts by weight of calcium stearate, 0.5 parts by weight of talc, 0.5 parts by weight of bentonite, and 0.2 parts by weight of silica was dry blended. The dry blended product was abbreviated as [GP].

[Preparation of Extruded Foam]

The obtained GP was supplied at about 800 kg/hr to an extruder in which a twin screw extruder (type DSM) equipped with a rotor having a bore of 150 mm, a single screw extruder having a bore of 200 mm, and a cooler were connected in series. The resin mixture supplied to the first extruder was heated at a resin temperature of 225°C, melted or plasticized, and kneaded, and a foaming agent (0.7 parts by weight of water (tap water), 3.5 parts by weight of

isobutane, and 2 parts by weight of dimethyl ether relative to 100 parts by weight of the styrenic resin) was pressed into the resin close to the end of the first extruder. Next, the resin was cooled to a resin temperature of 120°C in the second extruder connected to the first extruder and in the cooler, and was extrusion-foamed through a mouthpiece having a rectangular cross section with a thickness of 2 mm and a width of 400 mm provided at the end of a cooler into the atmosphere. The extruded foam was treated with a mold disposed in close contact with the mouthpiece and with forming rolls disposed at downstream of the mold, giving an extruded foam having a cross section shape with a thickness of 60 mm and a width of 1,000 mm. The foam was cut with a cutter into a thickness of 50 mm, a width of 910 mm, and a length of 1,820 mm. The foam was regarded as a foam when the number of recycling times was 0.

[Preparation of Recycled Resin]

Crushed foams by pulverization of the obtained foam with a crusher and cutting scraps generated by cutting the obtained foam with a cutter into predetermined dimensions were heated and reduced in volume in a hot-air drying furnace at a furnace temperature of 150°C for 1 minute, removing a foaming agent remaining in the foam. The substance is called RP2-2 (recycled styrenic resin 2).

[Preparation of Recycled Resin-Containing Extruded Foam]

An extruded foam was obtained in the same procedure as in the above preparation of the extruded foam except that RP2-2 obtained as above and GP were supplied at a weight ratio of 50:50 at about 800 kg/hr to an extruder in which a twin screw extruder (type DSM) equipped with a rotor having a bore of 150 mm, a single screw extruder having a bore of 200 mm, and a cooler were connected in series. The obtained foam was regarded as a foam when the number of recycling times was 1. Subsequently, recycling was repeated another four times in the same preparation conditions as for the recycled resin and the recycled resin-containing extruded foam. Table 1 shows the evaluation results of the obtained foams. Table 2 and Fig. 2 show the Mw retention ratios of the foams with respect to the number of recycling times of the foams.

(Examples 8 and 9)

Foams were obtained in the same procedure as in Example 7 except that the type and amount of a styrenic resin and the amounts of a flame retardant and a stabilizer were changed as shown in Table 1.

Table 1 shows characteristics of the foams obtained in Examples 7 to 9. Table 2 and Fig. 2 show the Mw retention ratios of the foams with respect to the number of recycling times of the foams.

[Table 1]

| | | | | Example 1 | | | | | | Example 2 | Example 3 | Example 4 | Example 5 | Example 6 | Example 7 | Example 8 | Example 9 |
|---|---|---|---|---|---|---|---|---|---|---|---|---|---|---|---|---|---|
| Number of recycling times | | | times | 0 | 1 | 2 | 3 | 4 | 5 | 5 | 5 | 5 | 5 | 5 | 5 | 5 | 5 |
| GP ratio | | | % | 100 | 50 | 50 | 50 | 50 | 50 | 50 | 50 | 50 | 50 | 50 | 50 | 50 | 50 |
| RP2-1 (recycled styrenic resin 2) ratio | | | % | 0 | 50 | 50 | 50 | 50 | 50 | 50 | 50 | 50 | 50 | 50 | – | – | – |
| RP2-2 (recycled styrenic resin 2) ratio | | | % | | | | | – | – | – | – | – | – | – | 50 | 50 | 50 |
| Production conditions | Styrenic resin | 680 (virgin styrenic resin) | parts by weight | 100 | ← | ← | ← | ← | ← | 100 | 100 | 100 | 100 | 100 | 100 | 100 | 0 |
| | | G9401 (virgin styrenic resin) | parts by weight | 0 | ← | ← | ← | ← | ← | 0 | 0 | 0 | 0 | 0 | 0 | 0 | 80 |
| | | SOP(recycled styrenic resin 1) | parts by weight | 0 | ← | ← | ← | ← | ← | 0 | 0 | 0 | 0 | 0 | 0 | 0 | 20 |
| | Flame retardant | EMERALD INNOVATION 3000 | parts by weight | 3 | ← | ← | ← | ← | ← | 3 | 3 | 5 | 1 | 3 | 3 | 3 | 4.5 |
| | Stabilizer | EP-13 | parts by weight | 0.15 | ← | ← | ← | ← | ← | 0.15 | 0.2 | 0.15 | 0.1 | 0.15 | 0.15 | 0.15 | 0.15 |
| | | ECN-1280 | parts by weight | 0.15 | ← | ← | ← | ← | ← | 0 | 0.3 | 0.25 | 0.05 | 0.15 | 0.15 | 0.15 | 0.225 |
| | | Plenlizer ST210 | parts by weight | 0.2 | ← | ← | ← | ← | ← | 0.15 | 0.5 | 0.2 | 0.2 | 0.2 | 0 | 0.2 | 0 |
| | | ANOX 20 | parts by weight | 0.3 | ← | ← | ← | ← | ← | 0.15 | 0.6 | 0.5 | 0.1 | 0.3 | 0.3 | 0.3 | 0.45 |
| | | Ultranox 626 | parts by weight | 0.015 | ← | ← | ← | ← | ← | 0 | 0.025 | 0.025 | 0.005 | 0.015 | 0.015 | 0.015 | 0.0225 |
| | Flame retardant auxiliary | Triphenylphosphine oxide | parts by weight | 0.5 | ← | ← | ← | ← | ← | 0.5 | 0.5 | 0 | 0 | 0.5 | 0 | 0 | 0 |
| | | Poly-1,4-diisopropylbenzene | parts by weight | 0.1 | ← | ← | ← | ← | ← | 0.1 | 0.1 | 0.1 | 0.2 | 0.1 | 0.2 | 0.2 | 0.2 |
| | Bubble regulating agent | Talc | parts by weight | 0.5 | ← | ← | ← | ← | ← | 0.5 | 0.5 | 0.5 | 0.5 | 0.5 | 0.5 | 0.5 | 0.5 |
| | Lubricant | Calcium stearate | parts by weight | 0.1 | ← | ← | ← | ← | ← | 0.1 | 0.1 | 0.1 | 0.1 | 0.1 | 0.1 | 0.1 | 0.1 |
| | Water-absorbing medium | Bentonite | parts by weight | 0.5 | ← | ← | ← | ← | ← | 0.5 | 0.5 | 0.5 | 0.1 | 0.3 | 0.5 | 0.5 | 0.5 |
| | | Silica | parts by weight | 0.2 | ← | ← | ← | ← | ← | 0.2 | 0.2 | 0.2 | 0 | 0 | 0.2 | 0.2 | 0.2 |
| | Heat ray radiation suppressor | Graphite | parts by weight | 0 | ← | ← | ← | ← | ← | 0 | 0 | 0 | 0 | 2.5 | 0 | 0 | 0 |
| | | Titanium oxide | parts by weight | 0 | ← | ← | ← | ← | ← | 0 | 0 | 0 | 0 | 1.5 | 0 | 0 | 0 |
| | Foaming agent | Isobutane | parts by weight | 3.5 | ← | ← | ← | ← | ← | 3.5 | 3.5 | 3.5 | 0 | 3.5 | 3.5 | 3.5 | 3.5 |
| | | Odorless butane | parts by weight | 0 | ← | ← | ← | ← | ← | 0 | 0 | 0 | 3.5 | 0 | 0 | 0 | 0 |
| | | Dimethyl ether | parts by weight | 2 | ← | ← | ← | ← | ← | 2 | 2 | 2 | 3 | 3 | 2 | 2 | 2 |
| | | Water | parts by weight | 0.7 | ← | ← | ← | ← | ← | 0.7 | 0.7 | 0.7 | 0.6 | 0.3 | 0.7 | 0.7 | 0.7 |
| Physical properties of extruded foam | Density | | kg/m$^3$ | 31 | 31 | 31 | 31 | 31 | 31 | 31 | 31 | 30 | 26 | 34 | 31 | 32 | 31 |
| | Flame retardancy | | - | ○ | ○ | ○ | ○ | ○ | ○ | ○ | ○ | ○ | ○ | ○ | ○ | ○ | ○ |
| | Oxygen index | | % | 28 | 28 | 28 | 28 | 28 | 28 | 29 | 26 | 30 | 29 | 27 | 29 | 27 | 27 |
| | Small bubble occupying area ratio | | % | 40 | 40 | 35 | 35 | 35 | 35 | 30 | 40 | 30 | <5 | <5 | 30 | 35 | 30 |
| | Bubble diameter | | mm | 0.4 | 0.4 | 0.45 | 0.45 | 0.45 | 0.45 | 0.45 | 0.4 | 0.5 | 0.5 | 0.15 | 0.45 | 0.4 | 0.4 |
| | Thermal conductivity | | W/mK | 0.026 | 0.026 | 0.027 | 0.027 | 0.027 | 0.027 | 0.028 | 0.026 | 0.028 | 0.032 | 0.024 | 0.027 | 0.027 | 0.027 |
| | Moldability | | - | ○ | ○ | ○ | ○ | ○ | ○ | ○ | ○ | ○ | ○ | ○ | ○ | ○ | ○ |
| | Mw retention ratio | | | 1.00 | 0.97 | 0.95 | 0.94 | 0.94 | 0.94 | 0.91 | 0.96 | 0.92 | 0.95 | 0.94 | 0.96 | 0.97 | 0.95 |

[Table 2]

| | Number of recycling times | Example 1 | Example 2 | Example 3 | Example 4 | Example 5 | Example 6 | Example 7 | Example 8 | Example 9 |
|---|---|---|---|---|---|---|---|---|---|---|
| Mw retention ratio | 0 | 1.00 | 1.00 | 1.00 | 1.00 | 1.00 | 1.00 | 1.00 | 1.00 | 1.00 |
| | 1 | 0.97 | 0.95 | 0.98 | 0.96 | 0.99 | 0.97 | 0.98 | 0.98 | 0.97 |
| | 2 | 0.95 | 0.93 | 0.97 | 0.94 | 0.98 | 0.96 | 0.98 | 0.97 | 0.97 |
| | 3 | 0.94 | 0.92 | 0.97 | 0.93 | 0.96 | 0.95 | 0.97 | 0.97 | 0.96 |
| | 4 | 0.94 | 0.91 | 0.96 | 0.92 | 0.95 | 0.94 | 0.97 | 0.97 | 0.95 |
| | 5 | 0.94 | 0.91 | 0.96 | 0.92 | 0.95 | 0.94 | 0.96 | 0.97 | 0.95 |

(Comparative Examples 1 to 6)

Foams were obtained in the same procedure as in Example 1 except that the types and amounts of a foaming agent, a flame retardant, a flame retardant auxiliary, a stabilizer, and other components were changed as shown in Table 3.

(Comparative Examples 7 to 9)

Foams were obtained in the same procedure as in Example 7 except that the types and amounts of a foaming agent, a flame retardant, a flame retardant auxiliary, a stabilizer, and other components were changed as shown in Table 3.

Table 3 shows characteristics of the foams obtained in Comparative Examples 1 to 9. Table 4, Fig. 3, and Fig. 4 show the Mw retention ratios of the foams with respect to the number of recycling times of the foams.

[Table 3]

| | | | Unit | Comparative Example 1 | | | | | | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|---|
| Number of recycling times | | | times | 0 | 1 | 2 | 3 | 4 | 5 | 5 | 5 | 5 | 5 | 5 | 5 | 5 | 5 |
| GP ratio | | | % | 100 | 50 | 50 | 50 | 50 | 50 | 50 | 50 | 50 | 50 | 50 | 50 | 50 | 50 |
| RP2-1 (recycled styrenic resin 2) ratio | | | % | 0 | 50 | 50 | 50 | 50 | 50 | 50 | 50 | 50 | 50 | 50 | – | – | – |
| RP2-2 (recycled styrenic resin 2) ratio | | | % | – | – | – | – | – | – | – | – | – | – | – | 50 | 50 | 50 |
| Production conditions | Styrenic resin | 680 (virgin styrenic resin) | parts by weight | 100 | ← | ← | ← | ← | ← | 100 | 100 | 100 | 100 | 100 | 100 | 100 | 100 |
| | Flame retardant | EMERALD INNOVATION 3000 | parts by weight | 3 | ← | ← | ← | ← | ← | 3 | 3 | 3 | 3 | 3 | 3 | 3 | 3 |
| | Stabilizer | EP-13 | parts by weight | 0.15 | ← | ← | ← | ← | ← | 0.05 | 0.15 | 0.15 | 0.15 | 0.15 | 0.05 | 0.15 | 0.15 |
| | | ECN-1280 | parts by weight | 0.15 | ← | ← | ← | ← | ← | 0 | 0.15 | 0.15 | 0.06 | 0.15 | 0 | 0.6 | 0.15 |
| | | Plenlizer ST210 | parts by weight | 0 | ← | ← | ← | ← | ← | 0.2 | 0.2 | 0.8 | 0.2 | 0 | 0.2 | 0 | 0 |
| | | ANOX 20 | parts by weight | 0.3 | ← | ← | ← | ← | ← | 0.3 | 0.05 | 0.3 | 0.3 | 0.3 | 0.3 | 0.3 | 0.3 |
| | | Ultranox 626 | parts by weight | 0.015 | ← | ← | ← | ← | ← | 0.015 | 0.015 | 0.015 | 0.015 | 0.1 | 0.015 | 0.015 | 0.1 |
| | Flame retardant auxiliary | Triphenylphosphine oxide | parts by weight | 0.5 | ← | ← | ← | ← | ← | 0.5 | 0.5 | 0.5 | 0.5 | 0.5 | 0 | 0 | 0 |
| | | Poly-1,4-diisopropylbenzene | parts by weight | 0.1 | ← | ← | ← | ← | ← | 0.1 | 0.1 | 0.1 | 0.1 | 0.1 | 0.2 | 0.2 | 0.2 |
| | Bubble regulating agent | Talc | parts by weight | 0.5 | ← | ← | ← | ← | ← | 0.5 | 0.5 | 0.5 | 0.5 | 0.5 | 0.5 | 0.5 | 0.5 |
| | Lubricant | Calcium stearate | parts by weight | 0.1 | ← | ← | ← | ← | ← | 0.1 | 0.1 | 0.1 | 0.1 | 0.1 | 0.1 | 0.1 | 0.1 |
| | Water-absorbing medium | Bentonite | parts by weight | 0.5 | ← | ← | ← | ← | ← | 0.5 | 0.5 | 0.5 | 0.5 | 0.5 | 0.5 | 0.5 | 0.5 |
| | | Silica | parts by weight | 0.2 | ← | ← | ← | ← | ← | 0.2 | 0.2 | 0.2 | 0.2 | 0.2 | 0.2 | 0.2 | 0.2 |
| | Heat ray radiation suppressor | Graphite | parts by weight | 0 | ← | ← | ← | ← | ← | 0 | 0 | 0 | 0 | 0 | 0 | 0 | 0 |
| | | Titanium oxide | parts by weight | 0 | ← | ← | ← | ← | ← | 0 | 0 | 0 | 0 | 0 | 0 | 0 | 0 |
| | Foaming agent | Isobutane | parts by weight | 3.5 | ← | ← | ← | ← | ← | 3.5 | 3.5 | 3.5 | 3.5 | 3.5 | 3.5 | 3.5 | 3.5 |
| | | Odorless butane | parts by weight | 0 | ← | ← | ← | ← | ← | 0 | 0 | 0 | 0 | 0 | 0 | 0 | 0 |
| | | Dimethyl ether | parts by weight | 2 | ← | ← | ← | ← | ← | 2 | 2 | 2 | 2 | 2 | 2 | 2 | 2 |
| | | Water | parts by weight | 0.7 | ← | ← | ← | ← | ← | 0.7 | 0.7 | 0.7 | 0.7 | 0.7 | 0.7 | 0.7 | 0.7 |
| Physical properties of extruded foam | Density | | $kg/m^3$ | 31 | 31 | 31 | 31 | 31 | 31 | 31 | 31 | 30 | 26 | 34 | 30 | 30 | 32 |
| | Flame retardancy | | – | ○ | ○ | ○ | ○ | ○ | ○ | ○ | ○ | × | × | × | ○ | × | × |
| | Oxygen index | | % | 29 | 29 | 29 | 29 | 29 | 29 | 29 | 27 | 24 | 24 | 24 | 28 | 24 | 24 |
| | Small bubble occupying area ratio | | % | 30 | 25 | 20 | 15 | 15 | 10 | 10 | 15 | 35 | 35 | 35 | 15 | 35 | 40 |
| | Bubble diameter | | mm | 0.4 | 0.4 | 0.5 | 0.6 | 0.6 | 0.65 | 0.45 | 0.5 | 0.4 | 0.5 | 0.4 | 0.5 | 0.4 | 0.4 |
| | Thermal conductivity | | W/mK | 0.027 | 0.027 | 0.028 | 0.029 | 0.029 | 0.03 | 0.03 | 0.028 | 0.027 | 0.027 | 0.027 | 0.029 | 0.027 | 0.027 |
| | Moldability | | – | ○ | ○ | ○ | × | × | × | × | × | ○ | ○ | ○ | × | ○ | ○ |
| | Mw retention ratio | | – | 1.00 | 0.93 | 0.88 | 0.86 | 0.85 | 0.84 | 0.83 | 0.87 | 0.96 | 0.95 | 0.95 | 0.86 | 0.96 | 0.96 |

[Table 4]

| | Number of recycling times | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Mw retention ratio | 0 | 1.00 | 1.00 | 1.00 | 1.00 | 1.00 | 1.00 | 1.00 | 1.00 | 1.00 |
| | 1 | 0.93 | 0.92 | 0.95 | 0.98 | 0.99 | 0.97 | 0.94 | 0.99 | 0.98 |
| | 2 | 0.88 | 0.87 | 0.92 | 0.97 | 0.98 | 0.96 | 0.92 | 0.98 | 0.98 |
| | 3 | 0.86 | 0.85 | 0.91 | 0.96 | 0.96 | 0.95 | 0.88 | 0.96 | 0.97 |
| | 4 | 0.85 | 0.84 | 0.88 | 0.96 | 0.95 | 0.94 | 0.87 | 0.96 | 0.96 |
| | 5 | 0.84 | 0.83 | 0.87 | 0.96 | 0.95 | 0.95 | 0.86 | 0.96 | 0.96 |

The comparison of Examples 1 to 9 with Comparative Examples 1 to 9 apparently indicates that by adding an aliphatic bromine-containing polymer as a flame retardant and further adding an epoxy compound (a) in an amount of

4 to 20 parts by weight, a polyhydric alcohol partial ester (b) in an amount ranging from 0 to 20 parts by weight depending on a processing temperature for recycling, a phenolic stabilizer (c) in an amount of 4 to 20 parts by weight, and a phosphite stabilizer (d) in an amount of 0 to 0.9 parts by weight, relative to 100 parts by weight of the flame retardant, as stabilizers, to a styrenic resin, a styrenic resin extruded foam having good moldability and higher flame retardancy, thermal stability, and thermal insulation properties can be stably produced even when a styrenic resin extruded foam containing the flame retardant and the stabilizers is reduced in volume by thermal shrinking and/or thermal melting and is recycled.

## Claims

1. A styrenic resin extruded foam produced by extrusion-foaming a styrenic resin and a foaming agent,
the styrenic resin containing 1 to 75% by weight of a recycled styrenic resin (hereinafter called recycled styrenic resin 2) that has been reduced in volume by thermal shrinking and/or thermal melting of a styrenic resin foam,
the styrenic resin extruded foam containing an aliphatic bromine-containing polymer as a flame retardant,
the styrenic resin extruded foam further containing

    an epoxy compound (a) in an amount of 4 to 20 parts by weight,
    a polyhydric alcohol partial ester (b) in an amount of 0 to 20 parts by weight,
    a phenolic stabilizer (c) in an amount of 4 to 20 parts by weight, and
    a phosphite stabilizer (d) in an amount of 0 to 0.9 parts by weight, relative to 100 parts by weight of the flame retardant, as stabilizers,

the styrenic resin extruded foam satisfying Expressions (1) and (2):

$$0 \leq X \leq 20, \text{ when } T \leq 180 \qquad \text{... (Expression 1)}$$

$$4 \leq X \leq 20, \text{ when } 180 < T \leq 240 \qquad \text{... (Expression 2)}$$

where X is an amount (parts by weight) of the polyhydric alcohol partial ester (b) relative to 100 parts by weight of the flame retardant, and T is a processing temperature (°C) at which the recycled styrenic resin 2 has been subjected to volume reduction,
the styrenic resin extruded foam passing burning test in accordance with JIS A9511 and/or having an oxygen index of 26% or more.

2. The styrenic resin extruded foam according to claim 1, wherein the aliphatic bromine-containing polymer is a brominated (styrene-butadiene block copolymer).

3. The styrenic resin extruded foam according to claim 1 or 2, wherein the aliphatic bromine-containing polymer is contained in an amount of 0.5 to 5 parts by weight relative to 100 parts by weight of the styrenic resin.

4. The styrenic resin extruded foam according to any one of claims 1 to 3, wherein the epoxy compound is at least one compound selected from the group consisting of bisphenol A diglycidyl ether epoxy resins represented by Structural Formula (1):

[C. 1]

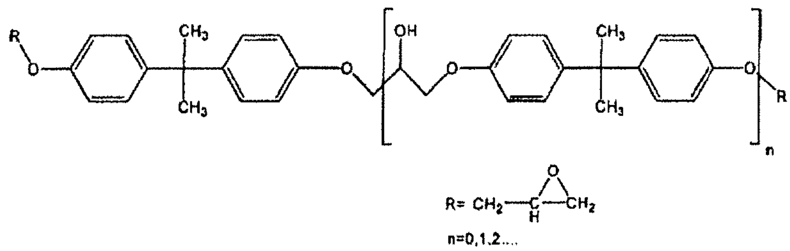

(Structural Formula 1)

, cresol novolac epoxy resins represented by Structural Formula (2):

[C. 2]

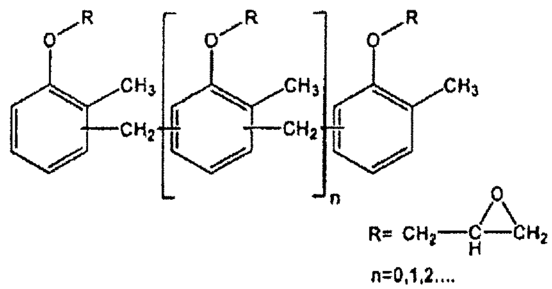

(Structural Formula 2)

, and phenol novolac epoxy resins represented by Structural Formula (3):

[C. 3]

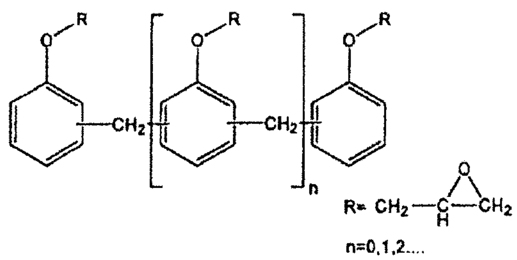

(Structural Formula 3)

.

**5.** The styrenic resin extruded foam according to any one of claims 1 to 4, wherein the polyhydric alcohol partial ester is a reaction product of dipentaerythritol and adipic acid.

**6.** The styrenic resin extruded foam according to any one of claims 1 to 5, wherein the phosphite stabilizer is at least one compound selected from the group consisting of 3,9-bis(2,4-di-tert-butylphenoxy)-2,4,8,10-tetraoxa-3,9-diphosphaspiro[5.5]u ndecane, 3,9-bis(2,6-di-tert-butyl-4-methylphenoxy)-2,4,8,10-tetraoxa-3,9-diphosphaspiro[5.5]undecane, and tetrakis(2,4-di-tert-butyl-5-methylphenyl)-4,4'-biphenylene diphosphonite.

**7.** The styrenic resin extruded foam according to any one of claims 1 to 6, further comprising a radical generator in an amount of 0.05 to 0.5 parts by weight relative to 100 parts by weight of the styrenic resin.

**8.** The styrenic resin extruded foam according to claim 7, wherein the radical generator is at least one compound selected from the group consisting of 2,3-dimethyl-2,3-diphenylbutane and poly-1,4-diisopropylbenzene.

**9.** The styrenic resin extruded foam according to any one of claims 1 to 8, further comprising at least one compound selected from the group consisting of phosphoric acid esters and phosphine oxides relative to 100 parts by weight of the styrenic resin.

**10.** The styrenic resin extruded foam according to claim 9, wherein the phosphoric acid ester is at least one compound selected from the group consisting of triphenyl phosphate and tris(tribromoneopentyl) phosphate, and the phosphine oxide is triphenylphosphine oxide.

**11.** The styrenic resin extruded foam according to any one of claims 1 to 10, wherein the foaming agent includes at least one compound selected from saturated hydrocarbons having a carbon atom number of 3 to 5.

**12.** The styrenic resin extruded foam according to claim 11, wherein the foaming agent further includes at least one agent selected from the group consisting of water, carbon dioxide, nitrogen, alcohols having a carbon atom number of 2 to 5, dimethyl ether, methyl chloride, and ethyl chloride.

**13.** The styrenic resin extruded foam according to any one of claims 1 to 12, further comprising at least one heat ray radiation suppressor selected from the group consisting of graphite, carbon black, aluminum pastes, titanium oxide, and barium sulfate.

**14.** The styrenic resin extruded foam according to any one of claims 1 to 13, wherein bubbles constituting the foam mainly include bubbles having a bubble diameter of 0.2 mm or less and bubbles having a bubble diameter of 0.25 to 1 mm.

**15.** The styrenic resin extruded foam according to claim 14, wherein of the bubbles constituting the foam, the bubbles having a bubble diameter of 0.2 mm or less have an occupying area ratio of 5 to 95% in a cross-sectional area of the foam.

**16.** A method for recycling a styrenic resin extruded foam, the method comprising extrusion-foaming a styrenic resin containing a recycled styrenic resin and a foaming agent to yield a styrenic resin extruded foam,
the styrenic resin containing 1 to 75% by weight of a recycled styrenic resin 2 that has been reduced in volume by thermal shrinking and/or thermal melting of a styrenic resin foam,
the styrenic resin extruded foam containing an aliphatic bromine-containing polymer as a flame retardant,
the styrenic resin extruded foam further containing

an epoxy compound (a) in an amount of 4 to 20 parts by weight,
a polyhydric alcohol partial ester (b) in an amount of 0 to 20 parts by weight,
a phenolic stabilizer (c) in an amount of 4 to 20 parts by weight, and
a phosphite stabilizer (d) in an amount of 0 to 0.9 parts by weight, relative to 100 parts by weight of the flame retardant, as stabilizers,

the styrenic resin extruded foam satisfying Expressions (1) and (2):

$$0 \leq X \leq 20, \text{ when } T \leq 180 \qquad \text{... (Expression 1)}$$

$$4 \leq X \leq 20, \text{ when } 180 < T \leq 240 \qquad \text{... (Expression 2)}$$

where X is an amount (parts by weight) of the polyhydric alcohol partial ester (b) relative to 100 parts by weight of the flame retardant, and T is a processing temperature (°C) at which the recycled styrenic resin 2 has been subjected to volume reduction.

**Patentansprüche**

1. Ein extrudierter Styrolharzschaum, der durch Extrusionsschäumen eines Styrolharzes und eines Schaummittels hergestellt wurde,
wobei das Styrolharz 1 bis 75 Gew.-% eines recycelten Styrolharzes (nachstehend als recyceltes Styrolharz 2 bezeichnet) enthält, dessen Volumen durch thermisches Schrumpfen und/oder thermisches Schmelzen eines Styrolharzschaums verringert wurde, wobei der extrudierte Styrolharzschaum ein aliphatisches bromhaltiges Polymer als ein Flammschutzmittel enthält,
wobei der extrudierte Styrolharzschaum ferner enthält:

    eine Epoxyverbindung (a) in einer Menge von 4 bis 20 Gewichtsteilen,
    einen mehrwertigen Alkoholpartialester (b) in einer Menge von 0 bis 20 Gewichtsteilen,
    einen Phenolstabilisator (c) in einer Menge von 4 bis 20 Gewichtsteilen und
    einen Phosphitstabilisator (d) in einer Menge von 0 bis 0,9 Gewichtsteilen, bezogen auf 100 Gewichtsteile des Flammschutzmittels, als Stabilisatoren,

wobei der extrudierte Styrolharzschaum die Ausdrücke (1) und (2) erfüllt:

$$0 \leq X \leq 20, \text{ wenn } T \leq 180 \quad \text{(Ausdruck 1)}$$

$$4 \leq X \leq 20, \text{ wenn } 180 < T \leq 240 \quad \text{(Ausdruck 2)}$$

    wobei X eine Menge (Gewichtsteile) des mehrwertigen Alkoholpartialesters (b), bezogen auf 100 Gewichtsteile des Flammschutzmittels, ist und T eine Verarbeitungstemperatur (°C) ist, der das recycelte Styrolharz 2 zur Volumenverringerung ausgesetzt wurde,
    wobei der extrudierte Styrolharzschaum den Brenntest gemäß JIS A9511 besteht und/oder einen Sauerstoffindex von 26% oder mehr aufweist.

2. Der extrudierte Styrolharzschaum gemäß Anspruch 1, wobei das aliphatische bromhaltige Polymer ein bromiertes (Styrol-Butadien-Blockcopolymer) ist.

3. Der extrudierte Styrolharzschaum gemäß Anspruch 1 oder 2, wobei das aliphatische bromhaltige Polymer in einer Menge von 0,5 bis 5 Gewichtsteilen, bezogen auf 100 Gewichtsteile des Styrolharzes, enthalten ist.

4. Der extrudierte Styrolharzschaum gemäß einem der Ansprüche 1 bis 3, wobei die Epoxyverbindung mindestens eine Verbindung, ausgewählt aus der Gruppe bestehend aus Bisphenol-A-Diglycidylether-Epoxyharzen der Strukturformel (1):

[C. 1]

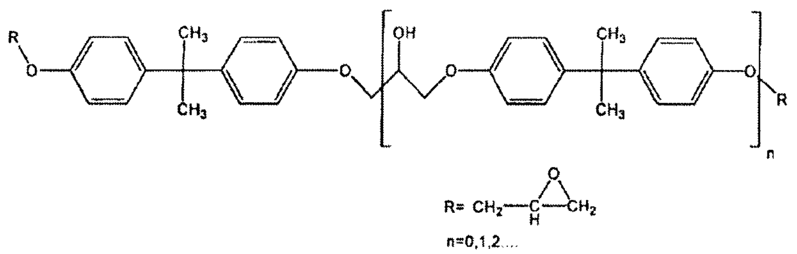

(Strukturformel 1),

Kresolnovolakepoxidharzen der Strukturformel (2):

[C. 2]

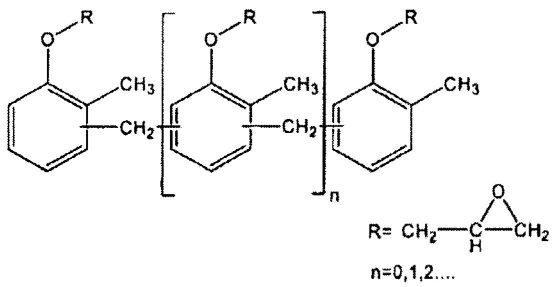

(Strukturformel 2),

und Phenolnovolak-Epoxyharzen der Strukturformel (3):

[C. 3]

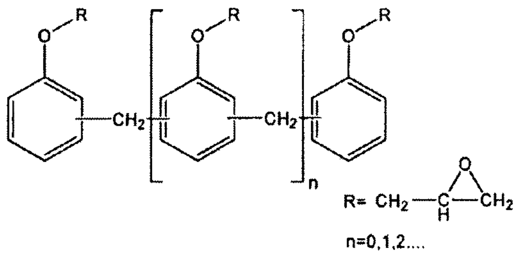

(Strukturformel 3)

ist.

5. Der extrudierte Styrolharzschaum gemäß einem der Ansprüche 1 bis 4, wobei der mehrwertige Alkoholpartialester ein Reaktionsprodukt von Dipentaerythrit und Adipinsäure ist.

6. Der extrudierte Styrolharzschaum gemäß einem der Ansprüche 1 bis 5, wobei der Phosphitstabilisator mindestens eine Verbindung ausgewählt aus der Gruppe bestehend aus 3,9-Bis(2,4-di-tert-butylphenoxy)-2,4,8,10-tetraoxa-3,9-diphosphaspiro[5.5]undecan, 3,9-Bis(2,6-di-tert-butyl-4-methylphenoxy)-2,4,8,10-tetraoxa-3,9-diphosphaspiro[5.5]undecan und Tetrakis(2,4-di-tert-butyl-5-methylphenyl)-4,4'-biphenylendiphosphonit ist.

7. Der extrudierte Styrolharzschaum gemäß einem der Ansprüche 1 bis 6, ferner umfassend einen Radikalbildner in einer Menge von 0,05 bis 0,5 Gewichtsteilen, bezogen auf 100 Gewichtsteile des Styrolharzes.

8. Der extrudierte Styrolharzschaum gemäß Anspruch 7, wobei der Radikalbildner mindestens eine Verbindung ausgewählt aus der Gruppe bestehend aus 2,3-Dimethyl-2,3-diphenylbutan und Poly-1,4-diisopropylbenzol ist.

9. Der extrudierte Styrolharzschaum gemäß einem der Ansprüche 1 bis 8, ferner umfassend mindestens eine Verbindung, ausgewählt aus der Gruppe bestehend aus Phosphorsäureestern und Phosphinoxiden, bezogen auf 100 Gewichtsteile des Styrolharzes.

10. Der extrudierte Styrolharzschaum gemäß Anspruch 9, wobei der Phosphorsäureester mindestens eine Verbindung ausgewählt aus der Gruppe bestehend aus Triphenylphosphat und Tris(tribromoneopentyl)phosphat ist, und das Phosphinoxid Triphenylphosphinoxid ist.

11. Der extrudierte Styrolharzschaum gemäß einem der Ansprüche 1 bis 10, wobei das Schaummittel mindestens eine Verbindung ausgewählt aus gesättigten Kohlenwasserstoffen mit einer Kohlenstoffatomzahl von 3 bis 5 enthält.

12. Der extrudierte Styrolharzschaum gemäß Anspruch 11, wobei das Schaummittel ferner mindestens ein Mittel enthält, das ausgewählt ist aus der Gruppe bestehend aus Wasser, Kohlendioxid, Stickstoff, Alkoholen mit einer Kohlenstoffatomzahl von 2 bis 5, Dimethylether, Methylchlorid und Ethylchlorid.

**13.** Der extrudierte Styrolharzschaum gemäß einem der Ansprüche 1 bis 12, ferner umfassend mindestens einen Wärmestrahlungsunterdrücker, ausgewählt aus der Gruppe bestehend aus Graphit, Ruß, Aluminiumpasten, Titanoxid und Bariumsulfat.

**14.** Der extrudierte Styrolharzschaum gemäß einem der Ansprüche 1 bis 13, wobei die den Schaum bildenden Blasen hauptsächlich Blasen mit einem Blasendurchmesser von 0,2 mm oder weniger und Blasen mit einem Blasendurchmesser von 0,25 bis 1 mm umfassen.

**15.** Der extrudierte Styrolharzschaum gemäß Anspruch 14, wobei von den den Schaum bildenden Blasen, Blasen mit einem Blasendurchmesser von 0,2 mm oder weniger einen Flächenanteil von 5 bis 95% in einer Querschnittsfläche des Schaums einnehmen.

**16.** Ein Verfahren zum Recyceln eines extrudierten Styrolharzschaums, wobei das Verfahren das Extrusionsschäumen eines Styrolharzes, das ein recyceltes Styrolharz und ein Schaummittel enthält, umfasst, um einen extrudierten Styrolharzschaum zu erhalten, wobei das Styrolharz 1 bis 75 Gew.-% eines recycelten Styrolharzes 2 enthält, dessen Volumen durch thermisches Schrumpfen und/oder thermisches Schmelzen eines Styrolharzschaums verringert wurde,
wobei der extrudierte Styrolharzschaum ein aliphatisches bromhaltiges Polymer als ein Flammschutzmittel enthält, wobei der extrudierte Styrolharzschaum ferner enthält:

eine Epoxyverbindung (a) in einer Menge von 4 bis 20 Gewichtsteilen,
einen mehrwertigen Alkoholpartialester (b) in einer Menge von 0 bis 20 Gewichtsteilen,
einen Phenolstabilisator (c) in einer Menge von 4 bis 20 Gewichtsteilen und
einen Phosphitstabilisator (d) in einer Menge von 0 bis 0,9 Gewichtsteilen, bezogen auf 100 Gewichtsteile des Flammschutzmittels, als Stabilisatoren,

wobei der extrudierte Styrolharzschaum die Ausdrücke (1) und (2) erfüllt:

$$0 \leq X \leq 20, \text{ wenn } T \leq 180 \quad \text{(Ausdruck 1)}$$

$$4 \leq X \leq 20, \text{ wenn } 180 < T \leq 240 \quad \text{(Ausdruck 2)}$$

wobei X eine Menge (Gewichtsteile) des mehrwertigen Alkoholpartialesters (b), bezogen auf 100 Gewichtsteile des Flammschutzmittels, ist und T eine Verarbeitungstemperatur (°C) ist, der das recycelte Styrolharz 2 zur Volumenverringerung ausgesetzt wurde.

## Revendications

**1.** Mousse extrudée de résine styrénique produite par expansion par extrusion d'une résine styrénique et d'un agent moussant,
la résine styrénique contenant 1 à 75 % en poids d'une résine styrénique recyclée (appelée ci-après résine styrénique recyclée 2) dont le volume a été réduit par retrait thermique et/ou fusion thermique d'une mousse de résine styrénique,
la mousse extrudée de résine styrénique contenant un polymère bromé aliphatique en tant qu'agent ignifugeant,
la mousse extrudée de résine styrénique contenant en outre un composé époxy (a) en une quantité de 4 à 20 parties en poids,
un ester partiel d'alcool polyhydrique (b) en une quantité de 0 à 20 parties en poids,
un stabilisant phénolique (c) en une quantité de 4 à 20 parties en poids, et
un stabilisant de type phosphite (d) en une quantité de 0 à 0,9 partie en poids, pour 100 parties en poids de l'agent ignifugeant, servant de stabilisant,
la mousse extrudée de résine styrénique satisfaisant aux expressions (1) et (2) :

$$0 \leq X \leq 20, \text{ quand } T \leq 180 \qquad \ldots \text{(expression 1)}$$

$$4 \leq X \leq 20, \text{ quand } 180 < T \leq 240 \qquad \ldots \text{ (expression 2)}$$

où X est la quantité (parties en poids) de l'ester partiel d'alcool polyhydrique (b) pour 100 parties en poids de l'agent ignifugeant, et T est la température de traitement (°C) à laquelle la résine styrénique recyclée 2 a été soumise à une réduction de volume,
la mousse extrudée de résine styrénique réussissant le test de combustion conformément à la norme JIS A9511 et/ou ayant un indice d'oxygène de 26 % ou plus.

2. Mousse extrudée de résine styrénique selon la revendication 1, dans laquelle le polymère bromé aliphatique est un copolymère séquencé de styrène-butadiène bromé.

3. Mousse extrudée de résine styrénique selon la revendication 1 ou 2, dans laquelle le polymère bromé aliphatique est contenu en une quantité de 0,5 à 5 parties en poids pour 100 parties en poids de la résine styrénique.

4. Mousse extrudée de résine styrénique selon l'une quelconque des revendications 1 à 3, dans laquelle le composé époxy est au moins un composé choisi dans l'ensemble constitué par les résines époxy d'éther diglycidylique de bisphénol A représentées par la formule structurelle (1) :

[C. 1]

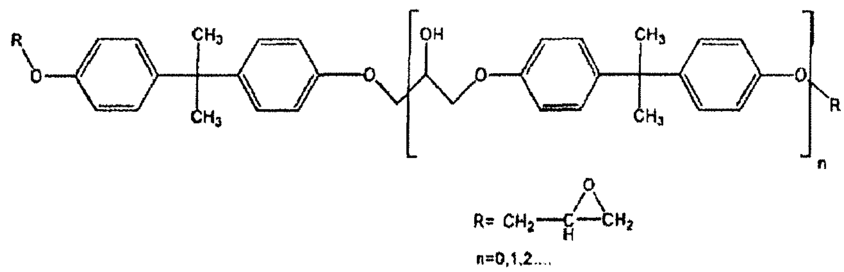

(formule structurelle 1),

les résines époxy novolaques de crésol représentées par la formule structurelle (2) :

[C. 2]

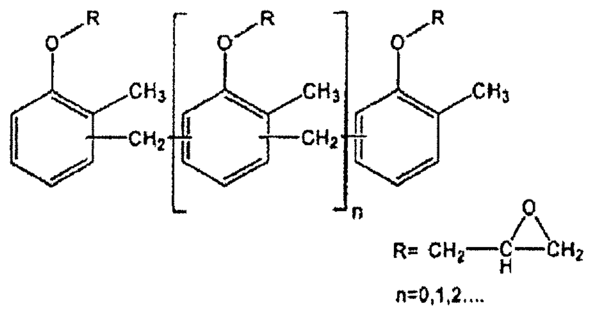

(formule structurelle 2),

et les résines époxy novolaques phénoliques représentées par la formule structurelle (3) :

[C. 3]

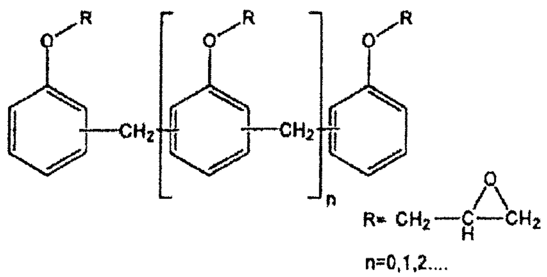

(formule structurelle 3).

5. Mousse extrudée de résine styrénique selon l'une quelconque des revendications 1 à 4, dans laquelle l'ester partiel d'alcool polyhydrique est le produit de la réaction de dipentaérythritol et d'acide adipique.

6. Mousse extrudée de résine styrénique selon l'une quelconque des revendications 1 à 5, dans laquelle le stabilisant de type phosphite est au moins un composé choisi dans l'ensemble constitué par le 3,9-bis(2,4-di-tert-butylphénoxy)-2,4,8,10-tétraoxa-3,9-diphosphaspiro[5.5]undécane, le 3,9-bis(2,6-di-tert-butyl-4-méthylphénoxy)-2,4,8,10-tétraoxa-3,9-diphosphaspiro[5.5]undécane, et le diphosphonite de tétrakis(2,4-di-tert-butyl-5-méthylphényl)-4,4'-biphénylène.

7. Mousse extrudée de résine styrénique selon l'une quelconque des revendications 1 à 6, comprenant en outre un générateur radicalaire en une quantité de 0,05 à 0,5 partie en poids pour 100 parties en poids de la résine styrénique.

8. Mousse extrudée de résine styrénique selon la revendication 7, dans laquelle le générateur radicalaire est au moins un composé choisi dans l'ensemble constitué par le 2,3-diméthyl-2,3-diphénylbutane et le poly-1,4-diisopropylbenzène.

9. Mousse extrudée de résine styrénique selon l'une quelconque des revendications 1 à 8, comprenant en outre au moins un composé choisi dans l'ensemble constitué par les esters d'acide phosphorique et les oxydes de phosphine pour 100 parties en poids de la résine styrénique.

10. Mousse extrudée de résine styrénique selon la revendication 9, dans laquelle l'ester d'acide phosphorique est au moins un composé choisi dans l'ensemble constitué par le phosphate de triphényle et le phosphate de tris(tribromonéopentyle), et l'oxyde de phosphine est l'oxyde de triphénylphosphine.

11. Mousse extrudée de résine styrénique selon l'une quelconque des revendications 1 à 10, dans laquelle l'agent moussant comprend au moins un composé choisi parmi les hydrocarbures saturés ayant de 3 à 5 atomes de carbone.

12. Mousse extrudée de résine styrénique selon la revendication 11, dans laquelle l'agent moussant comprend en outre au moins un agent choisi dans l'ensemble constitué par l'eau, le dioxyde de carbone, l'azote, les alcools ayant de 2 à 5 atomes de carbone, le diméthyléther, le chlorure de méthyle, et le chlorure d'éthyle.

13. Mousse extrudée de résine styrénique selon l'une quelconque des revendications 1 à 12, comprenant en outre au moins un agent supprimant l'irradiation de rayons thermiques choisi dans l'ensemble constitué par le graphite, le noir de carbone, les pâtes d'aluminium, l'oxyde de titane, et le sulfate de baryum.

14. Mousse extrudée de résine styrénique selon l'une quelconque des revendications 1 à 13, dans laquelle les bulles constituant la mousse comprennent principalement des bulles ayant un diamètre de bulle de 0,2 mm ou moins et des bulles ayant un diamètre de bulle de 0,25 à 1 mm.

15. Mousse extrudée de résine styrénique selon la revendication 14, dans laquelle, parmi les bulles constituant la mousse, les bulles ayant un diamètre de bulle de 0,2 mm ou moins ont un rapport de surface d'occupation de 5 à 95 % dans une surface en coupe transversale de la mousse.

16. Méthode de recyclage d'une mousse extrudée de résine styrénique, la méthode comprenant le moussage par extrusion d'une résine styrénique contenant une résine styrénique recyclée et un agent moussant pour engendrer une mousse extrudée de résine styrénique,

la résine styrénique contenant 1 à 75 % en poids d'une résine styrénique recyclée 2 dont le volume a été réduit par retrait thermique et/ou fusion thermique d'une mousse de résine styrénique,
la mousse extrudée de résine styrénique contenant un polymère bromé aliphatique en tant qu'agent ignifugeant,
la mousse extrudée de résine styrénique contenant en outre un composé époxy (a) en une quantité de 4 à 20 parties en poids,
un ester partiel d'alcool polyhydrique (b) en une quantité de 0 à 20 parties en poids,
un stabilisant phénolique (c) en une quantité de 4 à 20 parties en poids, et
un stabilisant de type phosphite (d) en une quantité de 0 à 0,9 partie en poids, pour 100 parties en poids de l'agent ignifugeant, servant de stabilisant,
la mousse extrudée de résine styrénique satisfaisant aux expressions (1) et (2) :

$$0 \leq X \leq 20, \text{ quand } T \leq 180 \quad \text{… (expression 1)}$$

$$4 \leq X \leq 20, \text{ quand } 180 < T \leq 240 \quad \text{… (expression 2)}$$

où X est la quantité (parties en poids) de l'ester partiel d'alcool polyhydrique (b) pour 100 parties en poids de l'agent ignifugeant, et T est la température de traitement (°C) à laquelle la résine styrénique recyclée 2 a été soumise à une réduction de volume.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007058736 A
- WO 2010080285 A
- JP 2008163185 A
- WO 2009029290 A